(19) Europäisches Patentamt
European Patent Office
Office européen des brevets

(11) **EP 4 495 196 A1**

(12) **EUROPEAN PATENT APPLICATION**
published in accordance with Art. 153(4) EPC

(43) Date of publication:
**22.01.2025 Bulletin 2025/04**

(21) Application number: **22932094.0**

(22) Date of filing: **17.03.2022**

(51) International Patent Classification (IPC):
***C09D 11/322*** (2014.01)   ***C09D 11/326*** (2014.01)
***C09D 11/54*** (2014.01)

(52) Cooperative Patent Classification (CPC):
**C09D 11/322; C09D 11/326; C09D 11/54**

(86) International application number:
**PCT/JP2022/012161**

(87) International publication number:
**WO 2023/175818 (21.09.2023 Gazette 2023/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **KONICA MINOLTA, INC.**
**Tokyo 100-7015 (JP)**

(72) Inventor: **HAYASHI, Kenji**
**Tokyo 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INKJET RECORDING INK, METHOD FOR MANUFACTURING INKJET RECORDING INK, INKJET RECORDING INK SET, IMAGE FORMING METHOD, AND IMAGE FORMING DEVICE**

(57) An object of the present invention is to provide an inkjet recording ink with an improved redispersibility of a white pigment, an inkjet recording ink producing method, an inkjet recording ink set, an image forming method and an image forming apparatus using the inkjet recording ink using the inkjet recording ink.

An inkjet recording ink according to the present invention contains at least a white pigment, a dispersant, and water, wherein the dispersant contains basic nitrogen.

FIG.1

EP 4 495 196 A1

**Description**

[Technical Field]

The present invention relates to an inkjet recording ink, an inkjet recording ink producing method, an inkjet recording ink set, and an image forming method, and an image forming apparatus using the inkjet recording ink. More specifically, the present invention relates to an ink for inkjet recording with an improved redispersibility of a white pigment and the like.

[Background Art]

An inkjet recording (hereinafter, also referred to as "printing") method is a recording method in which small droplets of an inkjet recording ink (hereinafter, also referred to simply as "ink") are ejected from an inkjet head and caused to land on the surface of a recording medium such as paper sheet. This method makes it possible to print high resolution and high-quality images at high speed with relatively inexpensive equipment.

In the inkjet recording method, the recording medium is not limited to white paper, and a transparent recording medium or a colored recording medium can be used. But when printing on these recording media, the transparency and color of the recording medium need to be sufficiently concealed by the ink, and a white ink is used.

The white pigment used in the white ink is greater in specific gravity than other components and is therefore prone to precipitation. Redispersion is required when the ink is used after long-term storage.

Patent Literature 1 discloses a technique for a white ink containing a nonionic dispersant having an acid value of 100 mg KOH/g or less and an anionic dispersant having an acid value of 100 mg KOH/g or more. The anion dispersant having an acid number of 100 mg KOH/g or more electrostatically interacts with the cationic fixing agent in the pre-treatment liquid to be applied to the base material. Therefore, by mixing the white ink and the pre-treatment liquid, the mixture aggregates on the base material, thereby enabling image formation.

It is described that even when the content of the white pigment in the white ink is relatively high, the white pigment can be prevented from aggregating with each other, and the accumulation of the white pigment in the head of an inkjet recording apparatus or on the surface of the head can be reduced.

However, nonionic dispersant having an acid value of 100 mg KOH/g or less does not have sufficient adsorptivity to the white pigment, and there is room for further improvement in the dispersibility and redispersibility of the white pigment in such a white ink.

Furthermore, Patent Literature 2 discloses a technique for a white ink containing a short-chain anionic dispersant having a weight average molecular weight in the range of 1000 to 30000 and a nonionic dispersant. However, even in the above-described technology, there is still room for improvement in the dispersibility and redispersibility of the white pigment in the white ink.

[Citation List]

[Patent Literature]

[Patent Literature 1] Chinese Patent Application Publication No. 107406698
[Patent Literature 2] Chinese Patent Application Publication No. 107429090

[SUMMARY OF INVENTION]

[Technical Problem]

The present invention has been made in view of the above-described problems and circumstances, and an object of the present invention is to provide an inkjet recording ink with an improved redispersibility of a white pigment, an inkjet recording ink producing method, an inkjet recording ink set, an image forming method and an image forming apparatus using the inkjet recording ink using the inkjet recording ink.

[Solution to Problem]

In order to solve the above-described problem, the present inventors have investigated the causes of the above-described problems and the like and as a result, have accomplished the present invention by discovering that in an inkjet recording ink containing at least a white pigment, a dispersant, and water, the redispersibility of the white pigment is improved when the dispersant contains basic nitrogen.

That is, the above-described problems according to the present invention are solved by the following means.

1. An inkjet recording ink containing:

at least a white pigment; a dispersant; and water,
wherein the dispersant has a basic nitrogen.

2. The inkjet recording ink according to claim 1,
wherein an amine value of the dispersant is within a range of 5 to 100 mg KOH/g.

3. The inkjet recording ink according to claim 1 or 2,
wherein a content of the dispersant is in a range of 2.5 to 15 mass% relative to a total mass of the white pigment.

4. The inkjet recording ink according to any one of claims 1 to 3, further containing:
an anionic resin.

5. The inkjet recording ink according to claim 4,
wherein the anionic resin is neutralized with a basic compound.

6. The inkjet recording ink according to claim 4 or 5,
wherein an acid value of the anionic resin is within a range of 50 to 250 mg KOH/g.

7. The inkjet recording ink according to any one of claims 4 to 6,
wherein a weight average molecular weight of the anionic resin is within the range of 5000 to 30000.

8. The inkjet recording ink according to any one of claims 4 to 7,
wherein a mass ratio of the content of the dispersant to a content of the anionic resin is within a range of 1:6 to 6:1.

9. The inkjet recording ink according to any one of claims 1 to 8,
wherein the white pigment is a white metal oxide.

10. The inkjet recording ink according to claim 9,
wherein the white metal oxide is rutile-type titanium oxide particles.

11. The inkjet recording ink according to any one of claims 1 to 10,
wherein the white pigment is at least alumina-treated.

12. The inkjet recording ink according to any one of claims 1 to 11,
wherein an average dispersed particle diameter of the white pigment is within a range of 150 to 350 nm.

13. An inkjet recording ink producing method for producing the inkjet recording ink according to any one of claims 1 to 12,
wherein the method comprises producing a pigment dispersion (I) containing the white pigment, the dispersant, and the water.

14. An inkjet recording ink producing method for producing the inkjet recording ink according to any one of claims 4 to 12, the method comprising:

preparing a pigment dispersion (I) containing the white pigment, the dispersant, and the water; and
mixing the anionic resin with the pigment dispersion (I) to prepare a pigment dispersion (II).

15. An inkjet recording ink producing method for producing the inkjet recording ink according to any one of claims 4 to 12, the method comprising:
preparing a pigment dispersion (III) containing the white pigment, the dispersant, the water, and the anionic resin.

16. An inkjet recording ink set for producing the inkjet recording ink according to any one of claims 4 to 12,
wherein the treatment liquid contains a cationic compound.

17. An image forming method using the inkjet recording ink set according to claim 16, the method comprising:

applying the treatment liquid onto a recording medium; and
applying the inkjet recording ink onto the recording medium.

18. An image forming method using the inkjet recording ink set according to claim 16 and a color ink, the method comprising:

applying the treatment liquid onto a recording medium;
applying the inkjet recording ink onto the recording medium; and
applying the color ink onto the recording medium.

19. An image forming method using the inkjet recording ink set according to claim 16 and a color ink, the method comprising:

applying the treatment liquid onto a recording medium;
applying the inkjet recording ink to an area onto which the treatment liquid has been applied; and
applying the color ink to the area onto which the inkjet recording ink has been applied.

20. An image forming apparatus using an inkjet recording ink containing at least a white pigment, a dispersant, and water,
wherein the image forming apparatus comprises a unit that performs the image forming method according to any one of claims 17 to 19.

[Advantageous Effects of Invention]

The above means of the present invention can provide an inkjet recording ink with an improved redispersibility of a white pigment, an inkjet recording ink producing method, an inkjet recording ink set, and an image forming method and an image forming apparatus using the inkjet recording ink.

The realization mechanism or action mechanism of the effect of the present invention is not clear, but it is inferred as follows.

Most of white pigments used in a white ink have a higher specific gravity than pigments of other colors and are prone to precipitation. Therefore, when a white ink is used after being stored for a long period of time, a white pigment in the white ink needs to be redispersed.

However, when the white ink is stored for a long period of time in a state in which the white pigment is precipitated, in some cases, the white pigment particles aggregate, and the particle diameter of the white pigment particles cannot be reduced to a desired particle diameter even through a step of redispersing the white pigment, and thus the white pigment cannot be sufficiently redispersed. In addition, when the white ink in a state where the white pigment is not sufficiently redispersed is used, the white pigment is deposited in the inkjet head and clogs a nozzle, and thus maintenance of the inkjet head is required.

One of the causes of re-aggregation of white pigment particles dispersed during preparation of the ink is an intermolecular force (van der Waals force) between the white pigment particles. The magnitude of the van der Waals force varies depending on the distance between the particles, and as the distance between the particles is smaller, the van der Waals force becomes larger and the particles are more likely to reaggregate.

As described above, many of the white pigments have a higher specific gravity than pigments of other colors and therefore are easily precipitated under long-term storage. Since sedimentation occurs when the density of the dispersed phase (here, the pigment particles) is larger than the density of the dispersion medium (here, water and the organic solvent), sedimentation occurs more easily as the specific gravity of the dispersed phase (the pigment particles) is larger.

The precipitated white pigment particles accumulate on the bottom of a storage container, for example, and the distance between the white pigment particles becomes smaller than in a dispersed state. Therefore, the van der Waals force acting between the white pigment particles becomes larger than that at the time of dispersion, and the white pigment particles easily aggregate again.

On the other hand, in general, the surface of the fine particle has a charge in many cases. For example, the surface of the metal oxide particle used as the white pigment is covered with hydroxyl groups, and the hydroxy groups are dehydrogenated or hydrogenated depending on the pH value of the ink, and thus the charge of the surface of the metal oxide particle varies depending on the pH value of the ink. The zeta potential is obtained by measuring this charge.

$$(\text{Formula 1}) \qquad -M\text{-}OH + OH^- \rightarrow -M\text{-}O^- + H_2O.$$

$$(\text{Formula 2}) \qquad -M\text{-}OH + H^+ \rightarrow -M\text{-}OH_2^+$$

In a case where the surface of the white pigment particles has an electric charge, an electrical repulsive force acts between the white pigment particles, and thus the white pigment particles are unlikely to aggregate in terms of electricity. However, when the white pigment particles are precipitated, the van der Waals force acting between the white pigment particles is significantly larger than the electric repulsive force, and thus the white pigment particles easily aggregate. In order that the precipitated white pigment particles are not easily aggregated, it is preferable to weaken the van der Waals force between the white pigment particles and it is preferable to further increase the distance between the white pigment particles.

The ink of the present invention contains a dispersant, and the dispersant has basic nitrogen.

In the present disclosure, the phrase "having basic nitrogen" means that nitrogen has basicity, that is, nitrogen has a property of easily attracting protons ($H^+$). As a mechanism in which nitrogen attracts a proton, two electrons of an unshared electron pair of nitrogen enter an orbit constituting an N-H bond to form a coordinate bond, thereby generating an ammonium cation.

Although details will be described later, in general, a dispersant has a pigment adsorption group (hydrophilic moiety) and a resin affinity moiety (hydrophobic moiety), and adsorbs to the surface of the white pigment particle exhibiting hydrophilicity via the pigment adsorption group.

Furthermore, in a case where the pH value of the ink is greater than 7 and is alkaline, for example, the surface of the metal oxide particle is negatively charged as shown in Formula 1. Thus the surface of the metal oxide particle and the positively charged ammonium cations are electrically attracted to each other, and the degree of adsorption is further increased. In addition, as the ammonium cation enters between the metal oxide particles, the distance between the metal oxide particles becomes relatively large, and thus the van der Waals force acting between the metal oxide particles becomes relatively weak, which makes the metal oxide particles less likely to aggregate.

Even in a case where the white pigment is other than the metal oxide, the surface of the pigment particle has a negative charge due to the functional group positioned on the surface, and the ammonium cation is adsorbed to the pigment particle. It is thereby possible to make the pigment particles difficult to aggregate.

Brief Description of Drawings

[FIG. 1] A schematic view showing an inkjet recording apparatus of the present invention
[FIG. 2] A bottom view of the carriage according to the present invention

Description of Embodiments

An inkjet recording ink according to the present invention contains at least a white pigment, a dispersant, and water, wherein the dispersant contains basic nitrogen.

This feature is a technical feature common to or corresponding to the following embodiments.

In view of storage stability of the ink and redispersibility of the white pigment, the amine value of the dispersant is preferably within a range of 5 to 100 mg KOH/g.

In view of whiteness, maintainability, and redispersibility of the white pigment, the content of the dispersant is preferably within a range of 2.5 to 15 mass% relative to the total mass of the white pigment.

In view of image quality, the inkjet recording ink preferably further contains an anionic resin.

In view of image quality, the anionic resin is preferably neutralized with a basic compound.

In view of image quality and whiteness, the acid value of the anionic polymer is preferably in a range of 50 to 250 mg KOH/g.

In view of maintainability, the weight average molecular weight of the anionic resin is preferably within a range of 5000 to 30000.

In view of whiteness and maintainability, the mass ratio of the content of the dispersant to the content of the anionic resin is preferably within a range of 1:6 to 6:1.

In view of redispersibility of the white pigment, the white pigment is preferably a white metal oxide.

In view of whiteness, the white metal oxide is preferably rutile-type titanium oxide particles.

In view of redispersibility of the white pigment, the white pigment is preferably at least alumina-treated.

In view of whiteness, the average dispersion particle diameter of the white pigment is preferably within a range of 150 to 350 nm.

The inkjet recording ink producing method of the present invention is a method for producing the inkjet recording ink of the present invention, and includes a step of preparing a pigment dispersion (I) containing a white pigment, a dispersant, and water.

The inkjet recording ink producing method of the present invention is a method for producing the inkjet recording ink of the present invention, which includes a step of preparing a pigment dispersion (I) containing a white pigment, a dispersant and water, and a step of mixing an anionic resin with the pigment dispersion (I) to prepare a pigment dispersion (II).

The method of producing the inkjet recording ink of the present invention is a method of producing the inkjet recording ink of the present invention, which includes a step of preparing a pigment dispersion (III) containing a white pigment, a dispersant, water, and an anionic resin.

The inkjet recording ink set of the present invention is an inkjet recording ink set including the inkjet recording ink of the present invention and a treatment liquid, wherein the treatment liquid contains a cationic compound.

The image forming method of the present invention is an image forming method using the inkjet recording ink set of the present invention, and includes steps of applying the treatment liquid to a recording medium, and applying the inkjet recording ink to the recording medium.

The image forming method of the present invention is an image forming method using the inkjet recording ink set and the color ink of the present invention, and the image forming method includes steps of applying the treatment liquid to a recording medium, applying the inkjet recording ink to the recording medium, and applying the color ink to the recording medium.

The image forming method of the present invention is an image forming method using the inkjet recording ink set and the color ink of the present invention, and includes steps of applying the treatment liquid onto a recording medium, applying the inkjet recording ink onto the region where the treatment liquid has been applied, and applying the color ink onto the region where the inkjet recording ink has been applied.

The image forming apparatus of the present invention is an image forming apparatus using the inkjet recording ink containing at least a white pigment, a dispersant and water, and has means for carrying out the image forming method of the present invention.

Hereinafter, the present invention, constituent elements thereof, and forms and aspects for carrying out the present invention will be described in detail. In the present description, when two figures are used to indicate a range of value before and after "to", these figures are included in the range as a lower limit value and an upper limit value.

«Summary of Inkjet Recording Ink»

The inkjet recording ink of the present invention (hereinafter, also referred to simply as "ink" or "white ink") is an inkjet recording ink containing at least a white pigment, a dispersant, and water, wherein the dispersant contains basic nitrogen.

Since the ink of the present invention is excellent in the redispersibility of the white pigment, the white pigment does not tend to accumulate in an inkjet head even when the white pigment is redispersed for use after long-term storage, which suppresses nozzle clogging. That is, the ejection stability can be improved. Furthermore, since the white pigment is less likely to accumulate in the inkjet head, the frequency of maintenance can be reduced.

In addition, the ink of the present invention is an ink containing a white pigment, but, according to the present invention, the redispersibility can also be improved in inks of other colors using a pigment which has a relatively large specific gravity and is easily precipitated.

In general, the white ink is not only used to exhibit white color, but also used to the transparency or color of a recording medium when a transparent recording medium or a colored recording medium is used. In this case, the coloring property of the recorded material can be improved by applying the white ink on the recording medium and then applying the color ink thereon, or by applying the color ink on the recording medium and then applying the white ink thereon.

<<Configuration of Inkjet Recording Ink>>

The ink of the present invention is an ink for inkjet recording containing at least a white pigment, a dispersant, and water, wherein the dispersant has basic nitrogen.

Hereinafter, the configuration of the ink of the present invention will be described.

[1. Dispersant]

The ink of the present invention contains a dispersant, and the dispersant has basic nitrogen.

The white pigment can be dispersed in the ink with a dispersant.

The dispersion step of dispersing a pigment includes the following three steps: 1) a wetting step, 2) a disintegrating step, and 3) a dispersion stabilizing step.

1) WETTING STEP

The surface of the aggregates of the pigment is wetted (moistened) and the entrance of a solvent and resin into the void portions is promoted.

2) DISINTEGRATING STEP

The aggregates of the pigment are disintegrated into primary particles or forms close thereto by mechanical force.

3) DISPERSION STABILIZATION

To stabilize a dispersion state by preventing reaggregation of particles of the pigment disintegrated to primary particles.

In general, a "wetting agent" is used for the purpose of further promoting wetting, and a "dispersant" is used for the purpose of further stabilizing a dispersed state.

By adding a wetting agent, the surface tension of the resin solution with respect to the pigment can be reduced, the contact angle can be brought close to zero, and the wettability of the pigment with respect to the resin solution can be increased. In general, a surfactant having a hydrophilic portion and a hydrophobic portion in one molecule is used as the wetting agent.

In the present invention, the term "dispersant" refers to a substance which, when added to a pigment dispersion, has a function of preventing reaggregation of particles of the pigment disintegrated into primary particles and stabilizing the pigment dispersion. The dispersant is adsorbed onto the surface of the pigment, and holds an appropriate space between the pigment particles by electrical repulsion or steric hindrance to suppress reaggregation.

In the present invention, a dispersant which maintains an appropriate space between pigment particles by steric hindrance and suppresses reaggregation is preferable, and the structure of such a dispersant preferably has a pigment adsorption group and a resin affinity portion (hydrocarbon chain). With the pigment adsorbing group, the dispersant can be strongly and persistently adsorbed to the surface of the pigment, many of which exhibit high polarity (hydrophilicity). Furthermore, with the resin affinity portion (hydrocarbon chain), the pigment can be dispersed in a resin solution. Furthermore, the resin-affinitive portion serves as a steric hindrance, suppressing reaggregation of the pigment.

Note that the pigment adsorbing group is a highly polar group (hydrophilic moiety) and the resin-affinitive portion is a lowly polar group/nonpolar group (hydrophobic moiety). Therefore the dispersant also functions as a wetting agent. Thus, a dispersant that also functions as a wetting agent is referred to as a "wetting dispersant". In the present invention, the wetting dispersant is included in the "dispersant".

Furthermore, the dispersant according to the present invention has basic nitrogen.

Since the dispersant according to the present invention has basic nitrogen, the dispersant generates an ammonium cation moiety in the ink, and the ammonium cation moiety in the dispersant and the surface of the white pigment particle electrically attract each other, which make it possible to increase the degree of adsorption.

Whether or not the dispersant has basic nitrogen can be determined by measuring the amine value of the dispersant and determining whether or not the value is more than 0.

(Amine Value)

In the present invention, the "amine value" refers to the number of milligrams of potassium hydroxide (KOH) equivalent to hydrochloric acid (HCl) required to neutralize basic nitrogen in 1 gram of a sample.

Note that the basic nitrogen in the dispersant exists as an amino group, and the amino group herein includes all of a primary amino group, a secondary amino group, and a tertiary amino group. That is, the amine value in the present invention refers to the number of milligrams of potassium hydroxide (KOH) equivalent to hydrochloric acid (HCl) required to neutralize all of primary amino groups, secondary amino groups, and tertiary amino groups.

The amine value can be measured by the following method in accordance with JIS-K7237.

A 0.5 g sample of the dispersant accurately weighed is put into a beaker of 100 mL, and is dissolved in 50 mL of acetic acid. With an automatic titrator equipped with a pH-electrode, the sample solution is titrated to neutrality with 0. 1 mol/L perchloric acid solution. The inflection point of the titration pH curve is defined as the titration end point, and the amine value is determined by the following formula.

$$\text{(Formula 3) Amine value [mg KOH/g]} = (561 \times V)/(W \times S)$$

The characters represent the following measurements.

W: dispersant sample weighing amount [g]
V: titrated amount at titration end point [mL]
S: solid content concentration of dispersant sample [mass%]

In view of excellent storability of the ink and excellent redispersibility of the white pigment, the amine value of the dispersant is preferably in a range of 5 to 100 mg KOH/g, preferably in a range of 10 to 80 mg KOH/g, and preferably in a range of 15 to 70 mg KOH/g. When the amine value is 5 mg KOH/g or more, an ammonium cation moiety in the dispersant and the surface of the white pigment particles are electrically attracted to each other to be stabilized, and thus the reaggregation of the white pigment particles can be suppressed. In addition, when the amine value is 100 mg KOH/g or less, the ammonium cation moiety in the dispersant is adsorbed onto the surfaces of the white pigment particles, but the non-cationic moiety other than the ammonium cation moiety in the dispersant causes appropriate steric hindrance, and thus it is possible to suppress reaggregation of the white pigment particles.

In view of excellent whiteness, maintainability, and redispersibility of the white pigment, the content of the dispersant is preferably in a range of 2.5 to 15 mass%, more preferably in a range of 2.5 to 12.5 mass%, and still more preferably in a range of 2.5 to 10 mass% with respect to the total mass of the white pigment contained in the ink.

Examples of the dispersant include: salts of long-chain polyaminoamides and high-molecular-weight acid esters; salts of long-chain polyaminoamides and polar acid esters; polyesterpolyamines; stearylamine acetate; (partial) amine salts, (partial) ammonium salts or (partial) alkylamine salts of (co)polymers of unsaturated carboxylic acids such as polyacrylic acid; unsaturated polyamides; long-chain polyaminoamide phosphates; polyethyleneimine-based compounds [example: amides which are reaction products of poly-lower alkyleneimines and free-carboxy-group-containing polyesters]; polyallylamine-based compounds [example: reaction products of polyallylamine and at least one compound selected from polyesters, polyamides and polyesteramides (co-condensates of esters and amides) having free carboxy groups].

Among these, a compound having a polyester polyamine skeleton or a compound having a polyethyleneimine skeleton is preferable, and a compound having a polyethyleneimine skeleton is more preferable.

The dispersant according to the present invention may have an acidic functional group in addition to an amino group, and the presence or absence of an acidic functional group can be determined by measuring the acid value. When the acid value is more than 0, it is determined that the dispersant has an acidic functional group. Note that a method for measuring the acid value will be described later.

Commercially available dispersants that can be used in the present invention are shown below.

1) Dispersants with an amino group and no acidic functional group (amine value > 0, acid value = 0)
Examples thereof are, DISPERBYK®-184, 185, 2014, 2018, 2019, 2055, 2061" (Byk-Chemie GmbH), "TEGO® Dispers650" (Evonik Operations GmbH), "Dispex® Ultra PA4550", 4560, 4575, 4585", "EFKA® 6230", (Basf SE), "AFCONA®-4531" (AFCONA Polymers Co., Ltd) and the like.
2) Dispersants with both an amino group and an acidic functional group (amine value and acid value both exceeding 0)

Examples thereof are, DISPERBYK®-180, 187, 191, 2010, 2012, 2013","ANTI-TERRA®-250" (Byk-Chemie GmbH), "TEGO® Dispers 660C, 760W " (Evonik Operations GmbH), "Dispex® Ultra PA4425" (Basf SE), "FLOWLEN G-700AMP", G-700DMAE" (Kyoeisha Chemical Industry Co., Ltd.), "DISPARLON AQ-360, 380 " (Kusumoto Chemicals, Ltd.), "AFCONA®-4570, 5071, 6220, 6225, 6226" (AFCONA Polymers Co., Ltd.) and the like.

[2. White Pigment]

The ink of the present invention contains a white pigment.

The ink can be a white ink with the white pigment.

The white pigment is not particularly limited as long as the white pigment is a pigment that allows a cured film formed by curing an ink containing the white pigment to appear white. Examples of the white pigment include titanium oxide, zinc oxide, zinc sulfide, calcium carbonate, calcium silicate, barium sulfate, aluminum hydroxide, antimony oxide, zirconium dioxide, silicas such as finely divided silicic acid and synthetic silicates, talc, clay, white hollow resin particles, and white polymer particles. Among these, in view of whiteness (color developing properties), a white metal oxide is preferable, and titanium oxide is more preferable.

These may be used alone or in combination of two or more kinds thereof.

In view of whiteness (coloring properties), the particle diameter of the white pigment in a dispersed state (average dispersed particle diameter) is preferably in a range of 150 to 350 nm, more preferably in a range of 160 to 320 nm, and still more preferably in a range of 180 to 300 nm.

Note that here, the " the white pigment in a dispersed sate" may be when the white pigment dispersion used in the preparation of the ink is prepared, or when the prepared ink is redispersed after long-term storage.

The average dispersed particle diameter can be measured using a particle diameter measuring apparatus and a dynamic light scattering method.

A slurry containing the white pigment is diluted with ion-exchanged water so that the content of the white pigment is 0.1 mass%, the diluted slurry is irradiated with laser light, and the intensity of scattered light scattered from the white pigment is measured as a change over time in microseconds. The detected scattering intensity distribution attributed to the white pigment is fitted to a normal distribution, and the Z average particle diameter of the white pigment particles is obtained by a cumulant analysis method.

An example of the particle size measuring apparatus includes Zetasizer Nano Z90 manufactured by Spectris Co., Ltd. The particle size measuring apparatus is equipped with data analysis software, and the data analysis software automatically analyzes the measurement data to calculate the Z average particle size.

The content of the white pigment is preferably in a range of 2 to 20 mass%, more preferably in a range of 3 to 18 mass%, and still more preferably in a range of 5 to 15 mass% with respect to the total mass of the ink.

[2.1. White Metal Oxide]

The white pigment according to the present invention is preferably a white metal oxide. When the white pigment is a white metal oxide, the amino group-containing dispersant is easily adsorbed to the white pigment particles, and thus the ink has more excellent redispersibility.

Specifically, as described above, the surface of the metal oxide particle is covered with hydroxy groups, and the hydroxy groups are dehydrogenated or hydrogenated depending on the pH value of the ink, and thus the charge of the surface of the metal oxide particle varies depending on the pH value of the ink. The zeta potential is obtained by measuring this charge.

$$\text{(Formula 1)} \qquad -M\text{-}OH + OH^- \rightarrow -M\text{-}O^- + H_2O.$$

$$\text{(Formula 2)} \qquad -M\text{-}OH + H^+ \rightarrow -M\text{-}OH_2{}^+$$

Furthermore, in a case where the pH value of the ink is greater than 7 and is alkaline, for example, the surface of the metal oxide particle is negatively charged as shown in Formula 1. Thus, the surface of the metal oxide particle and the positively charged ammonium cation moiety are electrically attracted to each other, and the degree of adsorption is further increased. In addition, as the ammonium cation moiety enters between the metal oxide particles, the distance between the metal oxide particles becomes relatively large, and thus the van der Waals force acting between the metal oxide particles becomes relatively weak, which makes the metal oxide particles less likely to aggregate.

Examples of the white metal oxide include titanium oxide, zinc oxide, antimony oxide, and zirconium dioxide.

[2. 1. 1. Titanium Oxide]

The white pigment according to the present invention is preferably titanium oxide. When the white pigment is titanium oxide, the whiteness (coloring properties and opacity) can be excellent, and the image quality can be improved as the particle diameter in a dispersed state can be adjusted within a suitable range.

The crystal form of the titanium oxide may be any of a rutile type (tetragonal crystal), an anatase type (tetragonal crystal), or a brookite type (orthorhombic crystal), but is preferably the anatase type having a relatively small specific gravity from the viewpoint that the particle size at the time of dispersion can be further reduced. In addition, from the viewpoint of further enhancing the opacity of an image to be formed, a rutile type having a relatively large refractive index in the visible light region is preferable. Further, the rutile type exhibits photocatalytic activity.

One of the titanium oxides having a crystal form listed above may be used alone, or two or more of the titanium oxides having different crystal forms may be used in combination.

In view of dispersibility, the titanium oxide is preferably surface-treated. In the surface treatment, at least part or all of the particles is to be treated. The surface treatment of titanium dioxide is not particularly limited, and examples thereof include a surface treatment with at least one of organic compounds such as alumina, silica, zinc oxide, zirconia, magnesium oxide, etc. and a surface treatment with at least one of inorganic compounds such as titanium coupling agent, silane coupling agent, and silicone oil.

In view of high color developability, the surface treatment is preferably performed with at least one of alumina, silica, or an inorganic compound, and among these, the surface treatment is more preferably performed with alumina. As the white ink has high color developability, the white ink has excellent opacity when it is used for the purpose of concealing the transparency or color of a recording medium, and the color developability of the color ink to be applied overlapping the white ink can be enhanced, that is, the image quality can be improved.

Note that the white pigment other than titanium oxide is also preferably surface-treated.

Commercially available titanium dioxide includes, for example, "CR-EL", "CR-50", "CR-50-2", "CR-58", "CR-80", "CR-90", "R-680", "R-930", "PF691", "A-220" (Ishihara Sangyo Kaisha, Ltd.), "TCR-52", "R-310", "R-32", "A-190", "A-197" (Sakai Chemical Industry Co., Ltd) "KR-310", "KR-380", "KR-380N" (Titan Kogyo, Ltd.).

[3. Water]

The ink of the present invention is characterized by containing water. The effect of the present invention can be realized by using a water-based ink. Furthermore, the water-based ink can have a lower content of organic solvents such as volatile organic compounds (VOCs) than the solvent ink. The water is not particularly limited, and may be ion-exchanged water, distilled water, or pure water.

The content of water in the ink is preferably adjusted as appropriate in accordance with the desired performance of the ink.

[4. Anionic Resin]

The ink of the present invention preferably further contains an anionic resin.

As the ink contains an anionic resin, the white pigment particles adsorbed to the dispersant to enter a network structure of the anionic resin, and the anionic resin and the ammonium cation moiety in the dispersant are electrically attracted to each other for stabilization. The white pigment particles can be stably and uniformly dispersed in the ink thereby.

In addition, the ink of the present invention can be used as an ink set in combination with a treatment liquid containing a cationic compound, which will be described in detail later.

When the ink is used as an ink set, the anionic resin contained in the ink of the present invention and the cationic compound contained in the treatment liquid electrically attract each other, and thus the white pigment is easily aggregated. That is, since the white pigment is easily aggregated by applying the ink and the treatment liquid of the present invention to the recording medium, ink bleeding on the recording medium can be suppressed, and thereby the image quality can be improved. This is not limitedly attributed to the treatment liquid. The image quality can be improved by using the ink of the present invention and an application liquid containing a cationic compound as a set.

In the present invention, the term "anionic" refers to being negatively charged in water, and the term "anionic resin" refers to a resin having an anionic functional group (a functional group that is negatively charged in water). Examples of such an anionic functional group include an acidic functional group.

(Acid Value)

The acid value of the anionic resin according to the present invention is preferably in the range of 50 to 250 mg KOH/g.

The acid value of the anionic resin is preferably in a range of 50 to 250 mg KOH/g, preferably in a range of 60 to 250 mg KOH/g, and preferably in a range of 70 to 240 mg KOH/g. When the acid value is within the above range, the white pigment particles can be stably and uniformly dispersed in the ink, and reaggregation of the white pigment can be suppressed, so that the image quality and the whiteness can be improved. Furthermore, when the acid value is within the above-described range, rapid aggregation of the white pigment is suppressed and the white pigment can be uniformly aggregated in a case of using a cationic treatment liquid. The image quality and whiteness can be improved thereby.

In the present invention, the "acid value" refers to the number of milligrams of potassium hydroxide (KOH) required to neutralize acidic components in 1 gram of a sample.

The acid value can be measured by the following method in accordance with JIS-K0070.

An anionic resin sample 0.100 g is accurately weighed in a 250 mL tall beaker, 150 mL of mixed solution of toluene/ethanol (3:1) is added thereto, and the sample is dissolved over a period of 1 hour. Next, the sample is potetiometrically titrated with 0. 1 mol/L potassium hydroxide-ethyl alcohol solution with a potentiometric titrator. Note that the factor of the potassium hydroxide ethyl alcohol solution can be determined using a potentiometric titrator. Next, as a blank test, a solution without the anionic resin sample (the mixed solution of toluene/ethanol (3:1) only) is titrated in the same manner, and the acid value is obtained by the following formula.

$$\text{(Formula 4) Acid value [mg KOH/g]} = [(C\text{-}B) \times f \times 5.\ 61]/S$$

The characters represent the following measurements.

B: titration amount [mL] of potassium hydroxide ethyl alcohol solution in blank test
C: titration amount [mL] of potassium hydroxide ethyl alcohol solution in main test
f: factor of potassium hydroxide ethyl alcohol solution
S: anionic resin sample weighing amount [g]

Further, the anionic resin is preferably neutralized with a basic compound.

In the present invention, the expression "neutralized with a basic compound" means that the anionic functional group and the basic compound are ionically bonded.

In general, when the resin has a polar group (hydrophilic group), the resin is relatively easily dissolved in water, and by appropriately adjusting the kind and number of the polar groups, the resin can be further easily dissolved in water.

Even if the resin has a suitable kind and number of polar groups, only a part of the polar groups is dissociated into ions and the resin is hardly dissolved in water in a case where ion dissociability of each polar group is small. Therefore, by prelimInarily neutralizing the resin with a basic compound, the ion dissociability of each polar group can be increased.

Therefore, it is preferable that the kind and amount of the basic compound added to neutralize the anionic resin are appropriately adjusted according to the acid value of the anionic resin.

The amount of the basic compound to be added for neutralization per 1 g of the anionic resin is an amount obtained by converting the acid value of the anionic resin into an equivalent amount of the basic compound. The amount of the basic compound to be added is preferably in a range of 20 to 100%, more preferably in a range of 30 to 90%, and still more preferably in a range of 40 to 80% with respect to the acid value [mg KOH/g] of the anionic resin.

(Weight Average Molecular Weight)

The weight average molecular weight of the anionic resin is preferably in a range of 5000 to 30000, more preferably in a range of 7000 to 25000, and still more preferably in a range of 10000 to 20000. The head maintainability is improved as the weight average molecular weight is within the range above. That is, even if dried ink adheres to a nozzle portion of an inkjet head, the dried ink can be relatively easily removed by wiping with a wiping member soaked with a maintenance liquid.

Note that the weight average molecular weight according to the present invention is a value (in terms of styrene conversion) measured by gel permeation chromatography (GPC).

The content of the anionic resin is preferably in a range of 2.5 to 15 mass%, more preferably in a range of 2.5 to 12.5 mass%, and still more preferably in a range of 2.5 to 10 mass%, with respect to the total mass of the white pigment contained in the ink.

Furthermore, in view of the whiteness and the maintainability, the mass ratio of the content of the dispersant to the content of the anionic resin is preferably within a range of 1:6 to 6:1, more preferably within a range of 1:4 to 4:1, and even more preferably within a range of 1:2 to 2:1.

Specific examples of usable resins include copolymers obtained by reacting: one or more carboxyl group-containing unsaturated monomers (including acid anhydride group-containing unsaturated monomers which give a carboxyl group upon ring-opening), such as acrylic acid, methacrylic acid, itaconic acid, maleic acid, maleic anhydride, maleic acid monoalkyl esters, citraconic acid, citraconic anhydride, and citraconic acid monoalkyl esters; and one or more of unsaturated monomers (preferably a methacrylate or acrylate having an alkyl group with a carbon number in the range of 1 to 18) such as styrenic monomers such as styrene, $\alpha$-methylstyrene, and vinyltoluene, aralkyl methacrylates or acrylates such as benzyl methacrylate and benzyl acrylate, alkyl methacrylates or acrylates such as methyl methacrylate, butyl methacrylate, 2-ethylhexyl methacrylate, stearyl methacrylate, lauryl methacrylate, methyl acrylate, butyl acrylate, 2-ethylhexyl acrylate, stearyl acrylate, and lauryl acrylate.

Specific examples of the copolymers include (meth) acrylic acid alkyl ester-(meth) acrylic acid copolymer, styrene-(meth) acrylic acid copolymer, styrene-(meth) acrylic acid-(meth) acrylic acid alkyl ester copolymer, styrene-maleic acid-(meth) acrylic acid alkyl ester copolymer, styrene-maleic acid half ester copolymer, styrene-maleic acid half ester-(meth) acrylic acid alkyl ester copolymer, styrene-(meth) acrylic acid-(meth) acrylic acid alkyl ester-benzyl (meth) acrylate copolymer, styrene-$\alpha$-methylstyrene-acrylic acid copolymer, styrene-$\alpha$-methylstyrene-acrylic acid-acrylic acid ester copolymer and the like.

In addition to the above, examples of the anionic resin include polycarboxylic acid, polyacrylic acid, and vinyl acetate-acrylic acid copolymer

Examples of commercially available products of anion resins include "JONCRYL® 67, 586, 611, 678, 680, 682, 683, 690, 693, 819", "ECO 675", "HPD 671", and "HPD 696" (BASF Japan Ltd.), "sodium polyacrylate salts T-50 and A-210", "ammonium polyacrylate saltA-30", and "ARUFON® UF-5041" (Toagosei Co., Ltd.), and "Aqualic® YS-100", "Aqualic® TL-37", "Aqualic® TL-213", "Aqualic® GL-366", and "Aqualic® GL-388" (Nippon Shokubai Co., Ltd).

As the basic compound, a nitrogen-containing basic group-containing compound or a metal hydroxide can be used.

The nitrogen-containing basic group-containing compound is preferably ammonia or an organic amine, more preferably an organic amine.

The organic amine is more preferably an amine having a hydroxy group, still more preferably an alkanolamine, and particularly preferably a primary or tertiary alkanolamine. Use of such an organic amine as the basic compound improves the dispersibility and the storage stability of the anionic resin in the ink.

Examples of the organic amine include alkylamines such as methylamine, dimethylamine, trimethylamine, ethylamine, diethylamine, and triethylamine; alkanolamines such as aminoethanol, methylaminoethanol, dimethylaminoethanol, ethylaminoethanol, diethylaminoethanol, diethanolamine, and triethanolamine; amines having a nonionic group such as methoxypoly(oxyethylene/oxypropylene)-2-propylamine, etc.

As the metal hydroxide, a hydroxide of an alkali metal or an alkaline earth metal or the like can be used.

Examples of the alkali metal hydroxide include lithium hydroxide, sodium hydroxide, and potassium hydroxide.

Examples of the hydroxide of the alkaline earth metal include beryllium hydroxide, magnesium hydroxide, calcium hydroxide and strontium hydroxide.

Among these, a hydroxide of an alkali metal is preferable, and lithium hydroxide or sodium hydroxide is preferable.

[5. Resin]

The ink of the present invention may further contain a resin. As the ink contains a resin, the fixability to a recording medium can be enhanced.

The fixing resin for enhancing the fixability is not particularly limited, and examples thereof include vinyl chloride-based resin, (meth) acrylic resin, urethane-based resin, polyether-based resin, and polyester-based resin. Furthermore, the following water-insoluble resin fine particles may be used.

(Resin Fine Particle Dispersion)

The resin fine particles described below are water-insoluble resin fine particles, and a fine particle dispersion liquid of a water-insoluble resin containing the water-insoluble resin fine particles exhibits solubility or affinity for the ink.

In the present invention, the "water-insoluble resin fine particle" is originally water-insoluble, but has a form in which the resin is dispersed in an aqueous medium as micro fine particles, and is a water-insoluble resin which is dispersed in water by forced emulsification with an emulsifier or the like, or a self-emulsifiable water-insoluble resin which forms a stable water dispersion by itself without using an emulsifier or a dispersion stabilizer by introducing a hydrophilic functional group into the molecule. These resins are usually used in a state of being emulsified and dispersed in water or a water/alcohol mixed solvent.

That is, by introducing a hydrophilic moiety (forcibly emulsifying with an emulsifier or the like, or introducing a hydrophilic functional group into the molecule) into the water-insoluble resin (hydrophobic moiety), a structure having a hydrophilic moiety and a hydrophobic moiety in the same particle can be formed, and the resin can be dispersed in an aqueous medium. Of these, a structure having a hydrophilic moiety and a hydrophobic moiety in the same molecule, that is, a self-emulsifiable water-insoluble resin which forms a stable aqueous dispersion by itself without using an emulsifier or a dispersion stabilizer by introducing a hydrophilic functional group into the molecule is preferable.

In the present invention, the term "water-insoluble" means that when the resin is dried at 105 °C for 2 hours and then dissolved in water of 100 g at 25 °C, the amount of dissolution is 10 g or less, preferably 5 g or less, and more preferably 1 g or less. However, when the resin has a salt-forming group, the amount of dissolution is the amount of dissolution when 100% of the salt-forming group of the resin is neutralized with acetic acid or sodium hydroxide, depending on the type of the salt-forming group.

The resin fine particles are preferably any one of acrylic resin fine particles, urethane resin fine particles, polyester resin fine particles, or composite resin fine particles of a urethane resin and an acrylic resin.

In addition, in a case where the resin fine particle dispersion is mixed with the treatment liquid according to the present invention, the dispersion becomes unstable and the fine particles adsorb and aggregate to each other, and thus the particle diameter of the fine particles increases. The average particle size (Z average particle size) of the resin fine particles here is preferably 1000 nm or more. The reason is not clear, but by using the polymer fine particles having an average particle diameter of 1000 nm or more in an aggregated state, excessive aggregation of the white pigment can be inhibited, and the image quality of the recorded material is improved.

Note that the average particle diameter (Z average particle diameter) of the fine particles can be measured by the following procedure using a particle diameter measuring device and a dynamic light scattering method.

A slurry containing the resin fine particles is diluted with ion-exchanged water so that the content of the resin fine particles is 0.1 mass%, the diluted slurry is irradiated with laser light, and the intensity of scattered light scattered from the resin fine particles is measured as a change over time in microseconds. The scattering intensity distribution attributed to the detected resin fine particles is fitted to a normal distribution, and the Z average particle diameter of the resin fine particles is obtained by a cumulant analysis method.

An example of the particle size measuring apparatus includes Zetasizer Nano ZS manufactured by Spectris Co., Ltd. The particle size measuring apparatus is equipped with data analysis software, and the data analysis software automatically analyzes the measurement data to calculate the Z average particle size.

In view of fixability, it is preferable to use resin fine particles having a mean particle size (Z average particle size) of less than 1000 nm in a state of aggregation.

The resin fine particles of the polyester resin, urethane resin, acrylic resin, or composite resin of urethane resin and acrylic resin described above are preferably anionic or nonionic.

The glass transition temperature (Tg) of the resin fine particles is preferably in the range of -30 to 100 °C.

The glass transition temperature (Tg) can be specified by reading the glass transition temperature Tg from an endothermic peak when the temperature is increased under the condition of a temperature increase rate of 10 °C/min in a temperature range of -30 to 200 °C using a differential scanning calorimeter (DSC).

Hereinafter, each of the resins will be described.

(Polyester Resin)

The polyester resin having a polyester skeleton as the water-insoluble resin particles can be obtained by using a polyhydric alcohol component and a polycarboxylic acid component such as a polycarboxylic acid, a polycarboxylic acid anhydride, or a polycarboxylic acid ester.

Specific examples of the polyhydric alcohol component include dihydric alcohols (diols) such as alkylene glycols having 2 to 36 carbon atoms (e.g., ethylene glycol, 1,2-propylene glycol, 1,3-propylene glycol, 1,4-butylene glycol and 1,6-hexanediol), alkylene ether glycols having 4 to 36 carbon atoms (e.g., diethylene glycol, triethylene glycol, dipropylene glycol, polyethylene glycol, polypropylene glycol and polybutylene glycol), cycloaliphatic diols having 6 to 36 carbon atoms (e.g., 1,4-cyclohexanedimethanol and hydrogenated bisphenol -A), adducts of the above cycloaliphatic diols with alkylene oxides having 2 to 4 carbon atoms (e.g., ethylene oxides (hereinafter abbreviated as EO), propylene oxides (hereinafter abbreviated as PO) and butylene oxides (hereinafter abbreviated as BO)) (number of moles added: 1 to 30), and adducts of bisphenols (e.g., bisphenol -A, bisphenol -F and bisphenol -S) with alkylene oxides having 2 to 4 carbon atoms (e.g., EO, PO and BO) (number of moles added: 2 to 30). These may be used alone or in combination of two or more kinds thereof.

Examples of the polyvalent carboxylic acid component include divalent carboxylic acids (dicarboxylic acids), specifically alkanedicarboxylic acids having 4 to 36 carbon atoms (e.g., succinic acid, adipic acid, and sebacic acid), alkenylsuccinic acids (e.g., dodecenylsuccinic acid), alicyclic dicarboxylic acids having 4 to 36 carbon atoms (e.g., dimer acid (dimerized linoleic acid)), alkenedicarboxylic acids having 4 to 36 carbon atoms (e.g., maleic acid, fumaric acid, citraconic acid, and mesaconic acid), and aromatic dicarboxylic acids having 8 to 36 carbon atoms (e.g., phthalic acid, isophthalic acid, terephthalic acid, or derivatives thereof, and naphthalenedicarboxylic acid). These may be used alone or in combination of two or more kinds thereof.

The number average molecular weight of the polyester resin is preferably in the range of 1,000 to 50000, and more preferably in the range of 2000 to 20000.

As the polyester resins, commercially available products may be used, and examples thereof include "PESRESIN A-110F; A-640; A-647GEX " (Takamatsu Oil & Fat Co., Ltd.); "Vylonal® MD-1100; MD-1200, MD-1335, MD-1480, MD-1930, MD-2000 " (Toyobo Co., Ltd.) and "Z-1100" (Goo Chemical Co., Ltd). These may be used alone or in combination of two or more kinds thereof.

(Urethane Resin)

As the urethane resin as the water-insoluble resin fine particles, those having a hydrophilic group can be used.

The urethane resin is preferably an aqueous dispersion in which a self-emulsifying urethane having a water-soluble functional group in the molecule thereof is dispersed, or an aqueous dispersion of a forcibly emulsified urethane which is emulsified under a strong mechanical shear force by using a surfactant in combination. The urethane resin in the aqueous dispersion can be obtained by a reaction of a polyol with an organic polyisocyanate and a hydrophilic group-containing compound.

Examples of polyols that may be used in the preparation of the aqueous dispersion of the urethane resin include polyester polyols, polyether polyols, polycarbonate polyols, and polyolefin-based polyols.

An example of polyester polyols includes low-molecular-weight polyol such as ethylene glycol, diethylene glycol, triethylene glycol, 1,2-and 1,3-propylene glycol, neopentyl glycol, 1,3-and 1,4-butanediol, 3-methylpentanediol, hexamethylene glycol, 1,8-octanediol, 2-methyl-1, 3-propanediol, Bisphenol A, Hydrogenated bisphenol A, trimethylolpropane, cyclohexanedimethanol; condensates with polyvalent carboxylic acid such as succinic acid, glutaric acid, adipic acid, sebacic acid, phthalic acid, isophthalic acid, terephthalic acid, trimellitic acid, tetrahydrofuran acid, endomethine tetrahydrofuran acid, and hexahydrophthalic acid; and the like.

Examples of the polyether polyol include polyethylene glycol, polypropylene glycol, polyethylene polytetramethylene glycol, polypropylene polytetramethylene glycol, polytetramethylene glycol and the like.

An example of the polycarbonate polyol can be obtained by a reaction of a carbonic acid derivative such as diphenyl carbonate, dimethyl carbonate, or phosgene, and a diol. Examples of the diol include ethylene glycol, diethylene glycol, triethylene glycol, 1,2-and 1,3-propylene glycol, neopentyl glycol, 1,3-and 1,4-butanediol, 3-methylpentanediol, hexamethylene glycol, 1,8-octanediol, 2-methyl-1, 3-propanediol, bisphenol A, hydrogenated bisphenol A, trimethylolpropane, cyclohexanedimethanol and the like.

In addition, examples of the organic polyisocyanate which can be used in the preparation of the aqueous dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); and aliphatic isocyanates such as hexamethylene diisocyanate (HMDI); and alicyclic isocyanates such as isophorone diisocyanate (IPDI) and 4,4'-dicyclohexylmethane diisocyanate (hydrogenated MDI, H12MDI). These may be used alone or in combination of two or more kinds thereof.

Examples of the hydrophilic group-containing compounds that can be used for the preparation of the aqueous dispersion of urethane resins include carboxylic acid-containing compounds such as 2,2-dimethylolpropionic acid, 2,2-dimethylolbutanoic acid, 2,2-dimethylolbutyric acid, 2,2-dimethylolvaleric acid and glycine, and derivatives thereof including sodium salts, potassium salts and amine salts; sulfonic acid-containing compounds such as taurin (i.e., aminoethylsulfonic acid) and ethoxypolyethylene glycol sulfonic acid and derivatives thereof including sodium salts, potassium salts, and amine salts.

The urethane resin can be obtained by a known method. For example, the urethane prepolymer can be obtained by mixing the polyol, the organic polyisocyanate, and the hydrophilic group-containing compound, and reacting the mixture at 30 to 130 °C for 30 minutes to 50 hours.

The urethane prepolymer becomes the urethane resin having a hydrophilic group by being extended and polymerized by a chain extender. The chain extender is preferably water and/or an amine compound. By using water or an amine compound as the chain extender, it is possible to react with a free isocyanate in a short time and efficiently extend the isocyanate-terminated prepolymer.

Examples of the amine compound include aliphatic polyamines such as ethylenediamine and triethylenediamine; aromatic polyamines such as metaxylenediamine and tolylenediamine; and polyhydrazino compounds such as hydrazine and adipic acid dihydrazide. The amine compound may contain a monovalent amine such as dibutyl amine, methyl ethyl ketoxime, or the like as a reaction terminator together with the polyamine to the extent that the polymerization is not significantly inhibited.

Note that in the synthesis of the urethane prepolymer, a solvent that is inert to isocyanate and can dissolve the urethane prepolymer may be used. Examples of the solvent include dioxane, methyl ethyl ketone, dimethylformamide, tetrahydrofuran, N-methyl-2-pyrrolidone, toluene, and propylene glycol monomethyl ether acetate. It is preferable that these hydrophilic organic solvents used in the reaction stage are finally removed.

In addition, in the synthesis of the urethane prepolymer, in order to accelerate the reaction, a catalyst such as an amine catalyst (for example, triethylamine, N-ethylmorpholine, or triethyldiamine), a tin-based catalyst (for example, dibutyltin dilaurate, dioctyltin dilaurate, or tin octylate), or a titanium-based catalyst (for example, tetrabutyl titanate) may be added.

It is preferable to increase the number average molecular weight of the urethane resin as much as possible by introducing a branched structure or an internal crosslinked structure, and the number average molecular weight is preferably 50000 to 10000000. When the number average molecular weight is within the above range, the urethane resin becomes less soluble in a solvent, and a coating film excellent in weather resistance and water resistance can be obtained. Note that the number-average molecular weight (Mn) is a value measured by gel permeation chromatography (GPC), and can be determined from the calibration curve prepared with the polystyrene standard samples using, for example, "RID-6A" manufactured by Shimadzu Corporation (column: "TSKgel" manufactured by Tosoh Corp., solvent: tetrahydrofuran (THF), column temperature: 40 °C).

Commercially available urethane resins may be used, and examples thereof include "WBR-016U" (Taisei Fine Chemical Co., Ltd.); "SUPERFLEX® 620, 650, 500M, E-2000 " (DKS Co. Ltd.); "PERMARIN® UC-20" (Sanyo Chemical Industries, Ltd.) and "PARASURF UP-22" (Ohara Paragium Chemical Co., Ltd.).

(Acrylic Resin)

The acrylic resin can be obtained using a copolymer with an acrylic acid ester component, a methacrylic acid ester component, a styrene component, or the like.

Examples of the acrylate ester components and the methacrylate ester components include methyl (meth) acrylate, ethyl (meth) acrylate, propyl (meth) acrylate, butyl (meth) acrylate, 2-hydroxyethyl (meth) acrylate, 2-hydroxypropyl (meth) acrylate, 4-hydroxybutyl (meth) acrylate, cyclohexyl (meth) acrylate, tetrahydrofurfuryl (meth) acrylate, isobornyl (meth) acrylate, benzyl (meth) acrylate, 2-hydroxybutyl (meth) acrylate, benzyl (meth) acrylate, glycidyl (meth) acrylate, (meth) acrylate, di (meth) acrylate (di) ethylene glycol, di (meth) acrylate-1, 4-butanediol, di (meth) acrylate-1, 6-hexanediol, trimethylolpropane tri (meth) acrylate, glycerin di (meth) acrylate, 2-ethylhexyl (meth) acrylate, lauryl (meth) acrylate, stearyl (meth) acrylate, acrylamide and the like.

Examples of the styrene component include styrene, 4-methylstyrene, 4-hydroxystyrene, 4-acetoxystyrene, 4-acetylstyrene, and styrenesulfonic acid. These components may be used alone or in combination of two or more kinds thereof.

The number average molecular weight (Mn) of the acrylic resin is preferably 1000 to 50000, more preferably 2000 to 20000. When the number average molecular weight (Mn) of the acrylic resin is 1000 or more, the cohesive force of the coating film becomes strong and the adhesiveness is improved, and when it is 50000 or less, the solubility in an organic solvent is good and the micronization of the particle diameter of the emulsified dispersion is promoted.

Note that the number-average molecular weight (Mw) is a value measured by gel permeation chromatography (GPC), and can be determined from the calibration curve prepared with the polystyrene standard samples using, for example, "RID-6A" manufactured by Shimadzu Corporation (column: "TSKgel" manufactured by Tosoh Corp., solvent: tetrahydrofuran (THF), column temperature: 40 °C).

As the acryl resin, commercially available products may be used, and examples thereof include acryl-based emulsions such as "Mowinyl® 6763" (Japan Coating Resin co.,ltd.), "RKW-620; UW-319SX; UW-600; UW-550CS (Taisei Fine Chemical Co., Ltd.); "2682, 2680, 2684, 2685, 2687" (Nissin Chemical co.,ltd.).

(Composite Resin Fine Particles)

The resin fine particles may be composite resin fine particles, and are preferably composite resin fine particles obtained by emulsifying an acrylic resin with a urethane resin. That is, the composite resin fine particle is preferably a composite resin fine particle having an inner layer composed of the acrylic resin and a surface layer composed of the urethane resin.

Here, the urethane resin exists at the interface between the acrylic resin as the water-insoluble resin fine particles and water as a continuous phase, and functions as a water-insoluble resin fine particle layer different from the resin that protects the water-insoluble resin particles.

When the composite resin fine particles are formed by emulsifying the acrylic resin with the urethane resin as described above, it is possible to suppress a decrease in compatibility with the urethane resin or the pigment aggregating agent as compared with the case where the acrylic resin is used alone. Furthermore, the physical properties of the image (coating film) can be improved and the stability of the ink can also be improved as compared with a case where the acrylic resin and the urethane resin are each emulsified and mixed.

In the composite resin fine particles obtained by emulsifying the acrylic resin with the urethane resin, the value (U/A) of the mass ratio of the urethane resin (U) to the acrylic resin (A) is preferably within the range of 40/60 to 95/5. When the proportion of the urethane resin (U) is within the above range, the compatibility with the dispersant is improved, and the solvent resistance is also improved. In addition, when the presence ratio of the acrylic resin (A) is within the above range, adhesion to the acrylic film is excellent. In the above abundance ratio, the value (U/A) of the mass ratio between the urethane resin (U) and the acrylic resin (A) is preferably within the range of 40/60 to 80/20.

The total resin content of the acrylic resin and the urethane resin in the composite resin fine particle is not particularly limited, but is preferably 5.0 mass% or more, and more preferably in the range of 10.0 to 70.0 mass% with respect to the total mass of the composite resin fine particle. When the content is within the above range, satisfactory fixing performance between the recording medium and the ink is obtained.

In the emulsification of the acrylic resin with the urethane resin, the surfactant acting as the emulsifier can be used together with the urethane resin. By adding the emulsifier, the storage stability of the composite resin fine particles can be improved.

As the emulsifier, an anionic surfactant or a nonionic surfactant can be used, and in the present invention, it is more preferable to use both of them. The content of the emulsifier (surfactant) is preferably within a range of 1.0 to 20.0 mass% relative to the total mass of the total resins of the acrylic resin and the urethane resin combined. Within the above range, the water resistance and solvent resistance can be improved.

The value of the content mass ratio (X/Y) of the anionic surfactant (X) to the nonionic surfactant (Y) is preferably within the range of 100/0 to 50/50. When the content is within the above range, the emulsifiability and the storage stability of the ink can be further improved.

Examples of the anionic surfactants include alkyl sulfates, polyoxyethylene alkyl ether sulfates, sulfosuccinates, alpha-olefin sulfonates, N-acyl amino acid salts, carboxylates, phosphate esters, and the like. Among these, sulfosuccinates or alpha-olefin sulfonates are preferable.

Furthermore, examples of the type of the salt include, but are not particularly limited to, metal salts such as a sodium salt, a potassium salt, and a magnesium salt, and a triethanolamine salt.

Examples of the nonionic surfactant include polyoxyethylene alkyl ethers, polyoxyethylene alkyl phenyl ethers, polyoxyethylene alkyl amine ethers, polyoxyethylene fatty acid esters, sorbitan fatty acid esters, and sucrose fatty acid esters. Among these, polyoxyethylene alkyl ethers or polyoxyethylene alkylphenyl ethers are preferable.

In view of enhancement of the fixability, the average particle size of the resin fine particles is preferably in the range of 10 to 500 nm, more preferably in the range of 10 to 300 nm, and still more preferably in the range of 10 to 200 nm. As described above, the average particle size can be measured by a commercially available particle size measuring instrument using a dynamic light scattering method, an electrophoresis method, or the like, but the dynamic light scattering method is simple and can accurately measure the region of the particle size.

Examples of commercially available products of the resin fine particles used in the ink according to the present invention are listed below.

(Polyester Resin)

"PESRESINA-110F, A-520, A-613D, A-615GE, A-640, A-645GH, and A-647GEX" (Takamatsu Oil & Fat Co., Ltd.), "Vylonal® MD-1200, 1480, 2000" (Toyobo Co., Ltd.), and "elitel® KA-5034, KA-50715, KA-1449, KA-0134, KA-3556, KA-6137, KZA-6034, KT-8803, KT-8701, KT-9204, KT-8904, KT-0507, and KT-9511" (UNITIKA LTD.).

(Urethane Resin)

"NeoRez® R-967, R-600, R-9671" (Kusumoto Chemicals, Ltd.), "W-6061, W-5661, WS-4000" (Mitsui Chemicals, Inc.), and "EVAFANOL® HA-560" (NICCA CHEMICAL CO.,LTD.).

(Acrylic Resin)

"Mowinyl (R) 6763, 6899D, 6969D, 6800, 6810" (Japan Coating Resin co.,ltd.) and "TOCRYL (R) W-7146, W-7150, W-7152" (Toyochem Co., Ltd.).
The content of the resin in the ink is preferably in a range of 2 to 15 mass% with respect to the total mass of the ink.

[6. Organic Solvent]

The ink of the present invention may further contain an organic solvent. The ink wettability and ink moisture retention on a recording medium can be improved with an organic solvent.
In addition, since the water-based ink contains water as a main solvent, it is difficult to adjust the viscosity of the water-based ink to a viscosity required for stable discharge. Therefore, although the organic solvent is also used for the purpose of thickening, it is desirable to suppress the VOC content to 30 mass% or less from the viewpoints of a reduction in load on the environment and drying properties.
The content of the organic solvent in the ink is not particularly limited, but is preferably in the range of 5 to 30 mass% with respect to the total mass of the ink. When the content is 5 mass% or more, clogging of the ink at the head nozzles and foaming of the ink can be suppressed.
The organic solvent is preferably a water-soluble organic solvent, and examples thereof include alcohols, polyhydric alcohols, amines, amides, glycol ethers, and 1,2-alkanediols having 4 or more carbon atoms.
Examples of the alcohols include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, benzyl alcohol and the like.
Examples of the polyhydric alcohols include ethylene glycol, diethylene glycol, triethylene glycol, tetraethylene glycol, polyethylene glycols having 5 or more ethylene oxide groups, propylene glycol, dipropylene glycol, tripropylene glycol, polypropylene glycols having 4 or more propylene oxide groups, butylene glycol, hexanediol, pentanediol, glycerin, hexanetriol, thiodiglycol, and the like.
Examples of the amines include ethanolamine, diethanolamine, triethanolamine, N-methyldiethanolamine, N-ethyldiethanolamine, morpholine, N-ethylmorpholine, ethylenediamine, diethylene diamine, triethylenetetramine, tetraethylenepentamine, polyethyleneimine, pentamethyldiethylenetriamine, tetramethylpropylenediamine and the like.
Examples of the amides include formamide, N,N-dimethylformamide, N,N-dimethylacetamide, and the like.
Examples of the glycol ethers include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, tripropylene glycol monomethyl ether, and the like.
Examples of the 1,2-alkanediols having 4 or more carbon atoms include 1,2-butanediol, 1,2-pentanediol, 1,2-hexanediol, and 1,2-heptanediol.
From the viewpoint of inhibition of bleeding during high-speed printing, the organic solvent is preferably a polyhydric alcohol, and among others, ethylene glycol, diethylene glycol, triethylene glycol, tetraethylene glycol, propylene glycol, dipropylene glycol, and tripropylene glycol are preferable.
These organic solvents may be used alone or in combination of two or more kinds thereof.

[7. Additives]

The ink according to the present invention may contain various known additives depending on the other purposes such as ejection stability, compatibility with a print head or ink cartridge, storage stability, and image storage stability.
Furthermore, it is preferable to adjust the pH value of the ink to more than 7 from the viewpoint of exhibition of the effect of the present invention. The pH adjuster is not particularly limited, and examples thereof include amines such as diethanolamine and triethanolamine.

Examples of the additive include a surfactant. When the surfactant is added, the ejection stability of the ink can be improved, and the spread (dot diameter) of the droplet of the ink landed on the recording medium can be controlled.

The surfactant is not particularly limited, but in a case where an anionic compound is included in the constituent components of the ink, the ionic property of the surfactant may be any of anionic, nonionic (also referred to as "non-ionic"), or amphoteric (having both a cationic functional group and an anionic functional group), and the amphoteric surfactant is preferably a betaine type.

In the present invention, when an alkaline component is contained in the anionic surfactant, the resin fine particles contained as the fixing resin are easily aggregated and the fixing property is lowered, and therefore, the surfactant is preferably nonionic.

As the surfactant, a fluorine-based or silicone-based surfactant having a high ability to reduce static surface tension, an anionic surfactant such as dioctyl sulfosuccinate having a high ability to reduce dynamic surface tension, and a nonionic surfactant having a relatively low molecular weight such as a polyoxyethylene alkyl ether, a polyoxyethylene alkylphenyl ether, an acetylene glycol, a Pluronic® surfactant, and a sorbitan derivative are preferable. Note that a surfactant having a high ability to decrease the static surface tension and a surfactant having a high ability to decrease the dynamic surface tension may be used in combination.

The content of the surfactant in the ink is not particularly limited, but is preferably in the range of 0.1 to 5.0 mass% with respect to the total mass of the ink.

In the ink according to the present invention, in addition to the above-described surfactants, various known additives, for example, polysaccharide, viscosity adjusting agent, resistivity adjusting agent, film forming agent, ultraviolet absorbent, antioxidant, anti-fading agent, anti-mold agent, rust inhibitor or the like can be appropriately selected and used, if necessary. Examples thereof include liquid paraffin, dioctyl phthalate, tricresyl phosphate, oil droplet fine particles of silicone oil or the like, ultraviolet absorbents described in JPS57-74193A, JPS5787988A, and JPS62261476A, anti-fading agents described in JPS5774192A, JPS5787989A, JPS6072785A, JPS61146591A, JPH0195091A, and JPH0313376A, and optical brighteners described in JPS5942993A, JPS5952689A, JPS62280069A, JPS61242871A, and JPH04219266A.

«Physical Properties of Inkjet Recording Ink»

The physical properties of the ink of the present invention are not particularly limited and may be appropriately selected depending on the intended purpose. For example, the viscosity, the surface tension, the pH, and the like are preferably within the following ranges.

The viscosity of the processing liquid at 25 °C is preferably in a range of 1 to 40 mPa · s, and more preferably in a range of 2 to 10 mPa · s, from the viewpoint that the print density and letter quality can be improved and that stable ejection from the nozzles of the inkjet head can be achieved.

The viscosity can be measured, for example, by using the rotational viscosity meter "TVE-33LT" manufactured by Toki Sangyo Co., Ltd. under the measurement conditions of 25 °C, a standard cone rotor (0.8 ° $\times$ R24), a sample liquid amount of 600 $\mu$L, and one minute.

The surface tension of the ink is preferably in a range of 1 to 55 mN/m at 25 °C, more preferably in a range of 1 to 40 mN/m or less, and still more preferably in a range of 1 to 35 mN/m, from the viewpoint that the ink is appropriately leveled on the recording medium and the drying time of the ink is shortened.

Note that the surface tension can be measured by the Wilhelmy method using a surface tensiometer "CBVP-Z" manufactured by Kyowa Interface Science Co., Ltd. or the like.

The pH value of the ink is preferably in a range of 6 to 10 at 25 °C, and more preferably in a range of 7 to 9.5, from the viewpoint of exhibiting the effect of the present invention.

Note that in consideration of the inferred realization mechanism, the pH value of the ink is preferably more than 7, and when the pH value is more than 7, the effect of the present invention can be sufficiently obtained. However, in actual, the effect of the present invention can be obtained even when the pH value is in the range of 6 to 7.

«Inkjet Recording Ink Producing Method»

The inkjet recording ink producing method of the present invention is a method for producing the inkjet recording ink described above, and includes a step of preparing the pigment dispersion (I) containing the white pigment, the dispersant, and the water.

The inkjet recording ink producing method of the present invention is a method for producing the inkjet recording ink described above, which includes a step of preparing the pigment dispersion (I) containing the white pigment, the dispersant and the water, and a step of mixing the anionic resin with the pigment dispersion (I) to prepare the pigment dispersion (II).

The inkjet recording ink producing method of the present invention is a method of producing the inkjet recording ink described above, which includes a step of preparing the pigment dispersion (III) containing the white pigment, the dispersant, the water, and the anionic resin.

The ink of the present invention is produced by preparing the pigment dispersion containing the white pigment, the dispersant, and water, and then mixing the pigment dispersion, the resin, water, the organic solvent, an additive, and the like. The method for mixing the materials is not particularly limited, and a known method can be used.

In a case of further incorporating an anionic resin into the ink, the ink is produced by preparing the pigment dispersion containing the white pigment, the dispersant, water, and the anionic resin, and then mixing the pigment dispersion, the resin, water, the organic solvent, the additive, and the like. Here, the anionic resin may be mixed later, or may be mixed at the same time, but from the viewpoint of efficiently adsorbing the dispersant onto the surfaces of the white pigment particles, the anionic resin is preferably mixed later.

Therefore, the ink without an anionic resin can be produced by preparing the pigment dispersion (I) containing the white pigment, the dispersant, and water, and then mixing the pigment dispersion, the resin, water, the organic solvent, the additive, and the like.

The ink containing an anionic resin can be produced by preparing the pigment dispersion (I) containing the white pigment, the dispersant, and water, mixing the pigment dispersion (I) with an anionic resin to prepare the pigment dispersion (II), and then mixing the pigment dispersion, the resin, water, the organic solvent, the additive, and the like.

The ink containing an anionic resin can also be produced by mixing the materials of the pigment dispersion including the white pigment, the dispersant, water, and the anionic resin at the same time to prepare the pigment dispersion (III) containing the white pigment, the dispersant, water, and the anionic resin, and then mixing the pigment dispersion, the resin, water, the organic solvent, the additive, and the like.

«Inkjet Recording Ink Set»

The ink set of the present invention is an ink set including the inkjet recording ink and the treatment liquid, wherein the treatment liquid contains a cationic compound.

Since the ink of the present invention is a water-based ink, when the ink is used on a recording medium having low or no ink absorbency, bleeding between ink droplets or color unevenness occurs. Therefore, it is necessary to intentionally increase the viscosity of the ink by aggregating the white pigment in the ink, and it is possible to suppress bleeding between the ink droplets and color unevenness by using the treatment liquid containing an aggregating agent and the ink in combination.

From the viewpoint of aggregating the white pigment in the ink and intentionally increasing the viscosity of the ink, it is preferable that the ink of the present invention further contains an anionic resin, and the treatment liquid according to the present invention contains a cationic compound. Hereinafter, the treatment liquid will be described.

The treatment liquid according to the present invention is not particularly limited as long as an aggregating agent can aggregate the white pigment in the ink and improve the image quality of recorded matter when used in combination with the ink, and may be a pre-treatment liquid or a post-treatment liquid.

Note that the term "pre-treatment liquid" refers to a treatment liquid to be applied to the surface of a recording medium before or at the same time as the ink is applied to the surface of the recording medium, and the term "post-treatment liquid" refers to a treatment liquid to be applied to the surface of the recording medium after the ink is applied to the surface of the recording medium.

Hereinafter, an example of the treatment liquid which is suitably used in the present invention will be described. The method of producing the treatment liquid is not particularly limited, and a known method can be used.

[1. Aggregating Agent]

Since the treatment liquid according to the present invention contains an aggregating agent, the white pigment in the ink can be aggregated, and the image quality of the recorded matter can be improved.

The aggregating agent is not particularly limited as long as it can aggregate the white pigment, and examples thereof include a cationic compound, and examples of the cationic compound include a metal salt, a cationic polymer, and an acid.

Note that the aggregating agent may be used alone or in combination of two or more kinds thereof.

As described above, since the surface of the white pigment particle is negatively charged and exhibits anionic properties under specific conditions in the ink, the white pigment particle interacts with the cationic compound, and thus the white pigment is easily aggregated. In a case where the ink of the present invention contains an anionic resin, the anionic resin and the cationic compound contained in the treatment liquid are electrically attracted to each other, and thus the white pigment is easily aggregated. That is, when the ink of the present invention and the treatment liquid are applied to a recording medium, the white pigment easily aggregate, so that bleeding of the ink on the recording medium is suppressed, the image quality can be improved, and furthermore, the whiteness of the ink in the image can be improved.

[1.1. Metal Salt]

(Polyvalent Metal Salt)

Among metal salts, a polyvalent metal salt is preferable in view of aggregability. The polyvalent metal salt can cause anionic components such as the white pigment in the ink to be aggregated by salting-out.

As the polyvalent metal salt, a salt of a metal having a valence of two or more can be used. The type of the metals (cations) constituting the polyvalent metallic salts is not particularly limited, and examples thereof include divalent metal ion such as $Ca^{2+}$, $Cu^{2+}$, $Ni^{2+}$, $Mg^{2+}$, $Zn^{2+}$, $Ba^{2+}$, trivalent metal ion such as $Al^{3+}$, $Fe^{3+}$, $Cr^{3+}$, $Y^{3+}$, and tetravalent metal ion such as $Zr^{4+}$.

In view of water solubility, $Ca^{2+}$, $Mg^{2+}$, $Zn^{2+}$, or $Al^{3+}$ is preferable, and $Ca^{2+}$ or $Mg^{2+}$ is more preferable.

The type of the anion constituting the polyvalent metal salt is not particularly limited, and may be an inorganic ion or an organic ion. Examples of the inorganic ions include carbonate ions, sulfate ions, nitrate ions, phosphate ions, chloride ions, and hydroxide ions, and examples of the organic ions include organic acid ions such as borate ions and carboxylate ions.

Examples of the polyvalent metallic salts include calcium carbonate such as ground calcium carbonate and precipitated calcium carbonate, calcium nitrate, calcium chloride, calcium sulfate, magnesium sulfate, calcium hydroxide, magnesium chloride, magnesium carbonate, barium sulfate, barium chloride, zinc carbonate, zinc sulfide, aluminum silicate, calcium silicate, magnesium silicate, copper nitrate, calcium acetate, magnesium acetate, aluminum acetate and the like.

These may be used alone or in combination of two or more kinds thereof.

Among these, magnesium sulfate, calcium nitrate, or calcium chloride is preferable from the viewpoint that water solubility is good and that traces attributed to the treatment liquid are reduced, that is, less noticeable.

Note that these metal salts may have hydration water in a raw material form.

(Monovalent Metal Salt)

Examples of the metal salt other than the polyvalent metal salt include monovalent metal salts such as sodium salts and potassium salts, and examples thereof include sodium sulfate and potassium sulfate.

The content of the metal salt is preferably 5 mass% or less, more preferably in the range of 0.1 to 3 mass%, and still more preferably in the range of 0.5 to 1.0 mass%, relative to the total mass of the treatment liquid. When the content is within the above range, anionic components such as the white pigment in the ink can be effectively aggregated, and thus both image quality and hot water resistance can be achieved.

The content of the metal salt can be measured by, for example, a known method such as ICP emission spectrometry.

In the processing liquid applied to the recording medium, the amount of the metallic salts added is preferably in the range of 0.1 to 20 $g/m^2$ and the amount of the processing liquid added is preferably adjusted so as to be in the above range.

[1.2. Cationic Resin]

A water-soluble cationic resin is preferable from the viewpoint of uniform dispersion in the treatment liquid.

Examples of the cationic resin include cationic urethane-based resins, cationic olefin-based resins, and cationic amine-based resins.

As the cationic urethane resin, commercially available products can be used, and examples thereof include "HYDRAN® CP-7010, CP-7020, CP-7030, CP-7040, CP-7050, CP-7060, CP-7610" (Dainippon Printing Ink Manufacturing Co., Ltd.); "SUPERFLEX® 600, 610, 620, 630, 640, 650" (DKS Co., Ltd.); "Urethane Emulsion WBR-2120C, WBR-2122C " (Taisei Fine Chemical Co., Ltd.).

The cationic olefin-based resin is a resin having an olefin such as ethylene and propylene in the structural skeleton, and known cationic olefin-based resins can be appropriately selected and used. Furthermore, the cationic olefin-based resin may be in an emulsion state in which the resin is dispersed in a solvent including water, an organic solvent, or the like. As the cationic olefin-based resin, commercially available products can be used, and examples thereof include "Arrowbase® CB-1200 and CD-1200" (UNITIKA LTD.).

As the cationic amine-based resin, any resin having an amino group in the structure may be used, and a known resin can be appropriately selected and used. Examples thereof include a polyamine resin having an amino group in the main skeleton of the resin, a polyamide resin having an amide group in the main skeleton of the resin, and a polyallylamine resin having an allyl group in the main skeleton of the resin.

Examples of commercially available products include "UNISENCE KHE103L" (SENKA Corporation, hexamethylenediamine/epichlorohydrin resins, 1% aqueous solutions thereof having a pH level of about 5.0, a viscosity of 20 to 50 (mPa · s) and having a solid concentration of 50% by mass) and "UNISENCE KHE104L" (SENKA Corporation, dimethylamine/epichlorohydrin resins, 1% aqueous solutions thereof having a pH level of about 70 and a viscosity of 1 to 10 (mPa · s) and having a solid concentration of 20% by mass).

Other examples include "FL-14" (SNF), "ARAFIX® 100, 251S, 255, 255 LOX" (Arakawa Chemical Industries,Ltd.), "DK-6810, 6853, 6885; WS-4010, 4011, 4020, 4024, 4027, 4030" (Seiko PMC Corporation), "PAPYOGEN® P-105" (SENKA Corporation) "Sumirez Resin 650(30), 675A, 6615, SLX-1" (Taoka Chemical Co., Ltd), "Catiomaster® PD-1, 7, 30, A, PDT-2, PE-10, PE-30, DT-EH, EPA-SK01, TMHMDA-E" (Yokkaichi Chemical Co., Ltd.), and "JETFIX 36N, 38A, 5052" (Satoda Chemical Industrial Co., Ltd.).

Examples of polyallylamine resins include polyallylamine hydrochloride, polyallylamine amide sulfate, allylamine hydrochloride-diallylamine hydrochloride copolymer, allylamine acetate-diallylamine acetate copolymer, allylamine hydrochloride-dimethylallylamine hydrochloride copolymer, allylamine-dimethylallylamine copolymer, polydiallylamine hydrochloride, polymethyldiallylamine hydrochloride, polymethyldiallylamine amide sulfate, polymethyldiallylamine acetate, polydiallyldimethylammonium chloride, diallylamine acetate-sulfur dioxide copolymer, diallylmethylethylammonium ethyl sulfate-sulfur dioxide copolymer, methyldiallylamine hydrochloride-sulfur dioxide copolymer, diallyldimethylammonium chloride-sulfur dioxide copolymer, diallyldimethylammonium chloride-acrylamide copolymer and the like.

In addition, a free type polyallylamine resin which is not neutralized with an acid, other than the above-described acid salt type, may be used. The free type form is preferable because when it is used in a treatment liquid containing water, the pH of the treatment liquid can be easily adjusted from neutral to alkaline, which is advantageous for the durability, corrosion, and the like of members of an inkjet recording apparatus. Examples of free-type polyallylamine resins include "PAA-01, PAA-03, PAA-05, PAA-08, PAA-15, PAA-15C, PAA-25" (Nittobo Medical Co., Ltd.).

The content of the cationic resin is preferably within a range of 1 to 5 % by mass with respect to the total mass of the processing liquid.

[1.3. Acid]

(Organic Acid)

Among acids, an organic acid is preferable from the viewpoint of storage stability of the treatment liquid and from the viewpoint that blocking can be suppressed after the treatment liquid is applied and dried. The organic acid can cause the anionic components such as the white pigment in the ink to be aggregated by a pH change.

Examples of the organic acids include formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, acrylic acid or a derivative thereof, methacrylic acid or a derivative thereof, acrylamide or a derivative thereof, and a sulfonic derivative.

These may be used alone or in combination of two or more kinds thereof.

The organic acid is preferably not completely neutralized with a base.

In the present invention, the term "neutralization with a base" means that an acidic group of such an acid is ionically bonded to another positively charged element or compound (for example, an inorganic compound such as a metal). Furthermore, the expression "not completely neutralized" refers to the presence of acidic groups that do not form the above-described ionic bond among the acidic groups of the organic acid.

(Inorganic Acid)

Examples of the acid other than the organic acid include inorganic acids, such as sulfuric acid, hydrochloric acid, nitric acid, and phosphoric acid.

These may be used alone or in combination of two or more kinds thereof.

The content of the acid is preferably 5% by mass or less, more preferably in the range of 0.1 to 3% by mass, and still more preferably in the range of 0.5 to 1.0% by mass, with respect to the total mass of the treatment liquid. When the content is within the above range, anionic components such as the white pigment in the ink can be effectively aggregated, and thus both image quality and hot water resistance can be achieved.

The acid content can be measured by a known method such as high-performance liquid chromatography (HPLC).

In the treatment liquid applied to the recording medium, the addition amount of the acid is preferably equal to or less than the neutralization equivalent of the anion component in the ink, and the addition amount of the processing liquid is preferably adjusted so as to be within the range described above.

[2. Water]

Furthermore, as the treatment liquid according to the present invention contains water, it can have a lower content of organic solvents such as volatile organic compounds (VOCs) than the solvent ink. The water is not particularly limited, and may be ion-exchanged water, distilled water, or pure water.

The content of the water in the treatment liquid is preferably within a range of 50 to 90 % by mass with respect to the total mass of the treatment liquid.

[3. Organic Solvent]

As the treatment liquid according to the present invention contains an organic solvent, the wettability and moisture retention of the treatment liquid on a recording medium can be improved. The organic solvent is preferably a water-soluble organic solvent, and examples thereof include alcohols, polyhydric alcohols, amines, amides, glycol ethers, and 1,2-alkanediols having 4 or more carbon atoms, and the same organic solvent as contained in the ink described above can be used.

The content of the organic solvent in the treatment liquid is preferably within a range of 5 to 45 % by mass with respect to the total mass of the treatment liquid.

[4. Additives]

The treatment liquid according to the present invention may appropriately contain a surfactant, a crosslinking agent, an anti-mold agent, a fungicide, and other components within a range not impairing the effects of the present invention.

Furthermore, for example, various known additives such as ultraviolet absorbents described in JPS5774193A, JPS5787988A and JPS62261476A, anti-fading agents described in JPS 5774192A, JPS5787989A JPS6072785A, JPS61146591A, JPH0195091A, and JPH0313376A, various anionic, cationic or nonionic surfactants, optical brighteners described in JPS5942993A, JPS5952689A, JP62280069A, JPS61242871A, and JPH04219266A, antifoaming agents, lubricants such as diethylene glycol and the like, preservatives, thickeners, antistatic agents and the like may be contained.

[5. Physical Properties]

Physical properties of the treatment liquid according to the present invention are not particularly limited and may be appropriately selected depending on the intended purpose. For example, the viscosity, the surface tension, the pH, and the like are preferably within the following ranges.

The viscosity of the treatment liquid at 25 °C is preferably in a range of 1 to 40 mPa · s, and more preferably in a range of 2 to 10 mPa · s, from the viewpoint that stable ejection from the nozzles of the inkjet head can be achieved.

The viscosity can be measured, for example, by using the rotational viscosity meter "TVE-33LT" manufactured by Toki Sangyo Co., Ltd. under the measurement conditions of 25 °C, a standard cone rotor (0.8 ° × R24), a sample liquid amount of 600 μL, and one minute.

The surface tension of the treatment liquid is preferably in a range of 1 to 55 mN/m at 25 °C, more preferably in a range of 1 to 40 mN/m or less, and still more preferably in a range of 1 to 35 mN/m, from the viewpoint that the ink is appropriately leveled on the recording medium and that the drying time of the ink is shortened.

Note that the surface tension can be measured by the Wilhelmy method using a surface tensiometer "CBVP-Z" manufactured by Kyowa Interface Science Co., Ltd. or the like.

<<Image Forming Method>>

The image forming method of the present invention is an image forming method using the inkjet recording ink set described above, and includes steps of applying the treatment liquid to a recording medium, and applying the inkjet recording ink to the recording medium.

The image forming method of the present invention is an image forming method using the inkjet recording ink set and the color ink described above, and the image forming method includes steps of applying the treatment liquid to a recording medium, applying the inkjet recording ink to the recording medium, and applying the color ink to the recording medium.

The image forming method of the present invention is an image forming method using the inkjet recording ink set and the color ink described above, and includes steps of applying the treatment liquid onto a recording medium, applying the inkjet recording ink onto the region where the treatment liquid has been applied, and applying the color ink onto the region where the inkjet recording ink has been applied.

As described above, when the ink of the present invention is used in combination with the treatment liquid (used as the ink set), the image quality of a recorded matter on a recording medium having low or no absorbency can be improved.

As described above, the coloring property of the recorded matter can be improved by applying the ink of the present invention on a recording medium and then applying the color ink thereon, or by applying the color ink on a recording medium and then applying the ink of the present invention thereon.

[1. Recording Medium]

The recording medium that can be used in the present invention is not particularly limited, and may be a recording medium having high absorbency or a recording medium having low absorbency or no absorbency. Furthermore, the recording medium may be a transparent recording medium or a colored recording medium.

Note that in the present invention, the term "absorbency" refers to absorbency for aqueous ink.

Examples of the recording medium having high absorbency include plain paper ranging from thin paper to thick paper, medium-quality paper, high-quality paper, and recycled paper.

When the ink of the present invention is used in combination with the treatment liquid (used as the ink set), the image quality of a recorded matter on a recording medium having low or no absorbency can be improved.

The recording medium having low or no absorbency include known plastic films, for example, polyester film such as polyethylene terephthalate, polyethylene film, polypropylene film, polyamide film such as nylon film, polystyrene film, polyvinyl chloride film, polycarbonate film, polyacrylonitrile film and biodegradable films such as polylactic acid film.

In addition, the recording medium may be a multi-layered recording medium in which a layer such as a polyvinyl alcohol (PVA) coat is provided on the surface of a recording medium having high absorbency such as paper to reduce or eliminate the absorbency of a region where recording is performed.

Further, in order to add a gas barrier property, a moisture-proof property, an aroma retaining property, or the like, a film coated with polyvinylidene chloride on one surface or both surfaces thereof or a film on which a metal oxide is vapor-deposited can also be preferably used. The film may be an unstretched film or a stretched film.

The thickness of the recording medium of a plastic film is preferably within a range of 10 to 120 $\mu$m, and more preferably within a range of 12 to 60 $\mu$m.

As the recording medium having low or no absorbency, metal such as a tin plate or a tin-free steel plate (TFS plate, thickness in a range of 0.1 to 0.6 $\mu$m) for three piece cans is also preferably used, and for example, it can be suitably used for a packaging material for canned food or the like, on which a thermosetting resin is provided as a coating layer. In the packaging material for canned food, for example, an epoxy-phenol-based coating material or a polyester-based laminating agent is generally used on the food side and a polyester-based or acryl-based thermosetting coating material is generally used on the outer side in order to block air, moisture, and light and to seal the food inside.

[2. Color Ink]

In the present invention, the term "color ink" refers to an ink exhibiting a color other than white, and is not particularly limited as long as it is an ink exhibiting a color other than white. In addition, black ink is also included in the color ink.

Hereinafter, the color ink suitably used in the present invention will be described. The components used in the ink of the present invention may be used in the color ink to the extent that the effects of the present invention are not impaired.

The color material may be a dye or a pigment, but is preferably a pigment. Furthermore, the color materials may be used alone or in combination of two or more kinds thereof.

An ink composed of only a color material exhibiting white does not correspond to the color ink according to the present invention, but an ink composed of a color material exhibiting white and a color material exhibiting a color other than white corresponds to the color ink according to the present invention.

The content of the color material is preferably in a range of 2 to 15 mass% and more preferably in a range of 3 to 13 mass% with respect to the total mass of the color ink. When the content is within the above range, a recorded matter having more excellent bleeding resistance and color developability is obtained.

The black color material used in the black ink is not particularly limited, and examples thereof include carbon black, for example, No.2300, No. 900, MCF 88, No.33, No.40, No.45, No.52, MA 7, MA 8, MA 100, No. 2200B, etc. (Mitsubishi Chemical Corporation), Raven 5750, Raven 5250, Raven 5000, Raven 3500, Raven 1255, Raven 700, etc. (Carbon Columbia), Regal 400R, Regal 330R, Regal 660R, Mogul L, Monarch 700, Monarch 800, Monarch 880, Monarch 900, Monarch 1000, Monarch 1100, Monarch 1300, Monarch 1400, etc. (CABOT JAPAN K. K), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 (Degussa) and the like.

Furthermore, a color material generally used for a white ink may be used in combination with a color material exhibiting a color other than white.

The color material used in the yellow ink is not particularly limited, and examples thereof include C. I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, 180.

The color material used in the magenta ink is not particularly limited, and examples thereof include C. I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, or C. I. Pigment Violet 19, 23, 32, 33, 36, 38, 43, 50.

The color material used in the cyan ink is not particularly limited, and examples thereof include C. I. Pigment Blue 1, 2, 3, 15, 15:1; 15:2; 15:3, 15:34, 15:4, 16, 18, 22, 25, 60, 65, 66, C. I. Vat Blue 4, 60.

The color materials other than magenta, cyan, and yellow is not particularly limited, and examples thereof include C. I. Pigment Green 7, 10, C. I. Pigment Brown 3, 5, 25, 26, C. I. Pigment Orange 1, 2, 5, 7, 13, 14, 15, 16, 24, 34, 36, 38, 40, 43, 63.

Examples of the metallic color material used in the metallic ink include metallic pigments, and metal fine particles can be used. Examples of the metal include aluminum, an aluminum alloy, and silver.

The "metallic ink" refers to an ink that is applied to a recording medium to form a pattern having a metallic luster, and the "metallic pigment" refers to a pigment that exhibits a metallic luster.

In a case of using a pigment as the color material, it is preferable to use the pigment in a state of a pigment dispersion in which the pigment is dispersed in water. Examples of methods for dispersing a pigment include a method of dispersing in water with a dispersant, a method of introducing a hydrophilic group onto the surface of a pigment particle by means of a chemical reaction and dispersing in water as a self-dispersible surface-treated pigment, and a method of coating a pigment with a polymer and dispersing in water.

The dispersant is not particularly limited, and examples thereof include the polymer dispersant (proteins such as glue, gelatin, casein, and albumin, natural rubbers such as gum arabic and tragacanth rubber, glucosides of saponins, alginic acid and propylene glycol ester, triethanolamine alginate, methylcellulose alginate fermentate of ammonium alginate, carboxymethyl cellulose, cellulose derivatives of ethylhydroxycellulose, polyvinyl alcohols, polypyrrolidones, polyacrylic acid, acrylic acid-acrylonitrile copolymer, potassium acrylate-acrylonitrile copolymer, vinyl acetate-acrylic acid ester copolymer, acrylic resin of acrylic acid-acrylic acid ester copolymer, styrene-acrylic acid copolymer, styrene-methacrylic acid copolymer, styrene-methacrylic acid-acrylic acid ester copolymer, styrene-acrylic resin of styrene-m-methylstyrene-acrylic acid copolymer, styrene-maleic acid copolymer, styrene-maleic anhydride copolymer, vinylnaphthalene-acrylic acid copolymer, vinyl acetate-ethylene copolymer, vinyl acetate-fatty acid vinyl ethylene copolymer, vinyl acetate-maleic acid ester copolymer, vinyl acetate-croton copolymer, vinyl acetate copolymers such as vinyl acetate-acrylic acid copolymers and salts thereof) and surfactants (various anionic surfactants, nonionic surfactant, amphoteric surfactant).

As the self-dispersible surface-treated pigment, for example, the pigment can be dispersed or dissolved in water without using a dispersant by performing a surface treatment such that a carboxy group and a salt thereof are directly bonded to the surface of the pigment.

Specifically, the pigment can be obtained by grafting a functional group or a molecule containing a functional group onto the surface of the pigment by physical treatment with vacuum plasma or chemical treatment with sodium hypochlorite, an oxidizing agent of ozone, and the like. The functional group grafted to one pigment particle may be of a single type or a plurality of types. The type of the functional group to be grafted and the grafting degree are appropriately selected in consideration of dispersion stability in the ink, color density, and drying properties in the front side of an inkjet head.

The polymer-coated pigment is not particularly limited, and can be obtained, for example, by dispersing a pigment using a dispersant having a polymerizable group, and then performing emulsion polymerization in water using a monomer copolymerizable with the dispersant (copolymerizable monomer) and a photo-radical polymerization initiator.

The polymer is preferably a polymer obtained by polymerizing a monomer or oligomer having at least one group selected from the category consisting of an acryloyl group, a methacryloyl group, a vinyl group, and an allyl group as a double bond according to a known polymerization method using a photo-radical polymerization initiator. As the emulsion polymerization, a general method can be used, and the polymerization proceeds by free radicals generated by thermal decomposition of a water-soluble photo-radical polymerization initiator in the presence of an emulsifier.

The pigments and the dispersants that constitute the pigment dispersion may each be used alone or in combination of two or more.

The color ink according to the present invention preferably further contains a resin, water, an organic solvent, an additive, and the like, and the resin, water, organic solvent, additive, and the like used in the ink of the present invention can be used.

[3. Image Forming Method]

The ink of the present invention is preferably used as the inkjet recording ink set described above, and is further preferably used in combination with a color ink.

In a case where an image is formed using the inkjet recording ink set, a layer formed of the white ink of the present invention (hereinafter, also referred to as a "white ink layer") and a layer formed of the treatment liquid (hereinafter, also referred to as a "treatment liquid layer") are layered on a recording medium. In addition, in a case of using a color ink together, a layer formed by the color ink (hereinafter, also referred to as "color ink layer") is further stacked.

On the recording medium, the stacking order of the layers corresponds to the application order of the inks and the treatment liquid. For example, when the treatment liquid layer, the white ink layer, and the color ink layer are stacked in this order from the recording medium side, the treatment liquid, the white ink, and the color ink are applied to the recording medium in this order. The application order of the inks and the treatment liquid can be adjusted by, for example, the arrangement order of the carriages in the image forming apparatus. Details will be described later.

The stacking order of the layers is preferably the treatment liquid layer, the white ink layer, and the color ink layer from the recording medium side, from the viewpoint that application of the treatment liquid onto the recording medium improves the image quality of a recorded matter on a recording medium having low or no absorbency, and the treatment liquid and the white ink of the present invention interact with each other, thereby improving the image quality of a recorded matter formed with the white ink of the present invention.

In addition, each layer may be a single layer or a plurality of layers. For example, the treatment liquid layer, the white ink layer, the color ink layer (1), the white ink layer, and the color ink layer (2) may be stacked in this order from the recording medium side. By layering in this way, the color ink layer (2) having relatively high lightness can be formed with high color development on the color ink layer (1) having relatively low lightness.

Hereinafter, a process of applying the treatment liquid, the white ink, and the color ink (a method of forming each layer) will be described. As described above, the order of the steps is not limited thereto.

In the present invention, the "step of applying the treatment liquid onto the recording medium" refers to a step of applying the treatment liquid directly onto the recording medium. In addition, the "step of applying the treatment liquid to the recording medium" is not limited to a step of directly applying the treatment liquid onto the recording medium, and also includes a step of applying the treatment liquid onto top of a region on the recording medium where another ink or the like has been applied.

The same applies to the white ink and the color ink.

Hereinafter, each step will be described. A case where the application steps are performed in the order of the treatment liquid application step, the white ink application step, and the color ink application step will be described as an example, but the order of the steps may be changed. For example, the treatment liquid application step, the color ink application step, and the white ink application step may be performed in this order. In addition, an ink heating and drying step to be described later may be appropriately performed.

1) Step of Applying Treatment Liquid onto Recording Medium (Treatment Liquid Applying Step)

In the treatment liquid application step, although not particularly limited, it is preferable to apply the treatment liquid directly onto the recording medium. The treatment liquid is preferably used in the treatment liquid application step. The method may further include a step of drying at least a portion of the applied treatment liquid during the treatment liquid application step or after the treatment liquid application step.

The method of applying the treatment liquid is not particularly limited, and examples thereof include a roller coating method, a curtain coating method, a spray coating method, and an inkjet coating method.

In the roller coating method, even in a case where the viscosity of the treatment liquid is relatively high, the treatment liquid can be efficiently applied to the recording medium by using a roller coating machine or the like. Note that the roller coating machine can be used in connection with the inkjet recording apparatus.

On the other hand, in the inkjet coating method, the treatment liquid can be applied only to the region to which the white ink is applied, and it is not necessary to apply the treatment liquid to the region to which the white ink is not applied. Therefore, in the region to which the white ink is not applied, it is possible to suppress generation of white turbidity due to the isolation of the unreacted aggregating agent.

As a method of applying the treatment liquid in the inkjet coating method, in a case where the recording medium is a metal, it is preferable that the recording medium is disposed on a conveyance belt of the inkjet recording apparatus and the treatment liquid is applied while conveying the belt, or that the recording medium is fixed to a flat bed and the treatment liquid is applied.

2) Step of Applying White Ink onto Recording Medium (White Ink Application Step)

In the white ink application step, although not particularly limited, it is preferable that the treatment liquid and the white ink are simultaneously applied onto the recording medium, or the white ink is applied onto top of a region to which the treatment liquid is directly applied on the recording medium. In the white ink application step, the ink of the present invention is used.

During or after the white ink application step, a step of drying at least a part of the treatment liquid and the white ink applied to the recording medium may be further included.

In a case where the white ink is applied onto top of a region to which the treatment liquid is directly applied on the recording medium, the treatment liquid and the white ink directly react with each other, and thus the white ink can be rapidly aggregated. Since the treatment liquid exhibits the aggregation effect even when the treatment liquid is not completely dried, the white ink can be applied immediately after the application of the treatment liquid, and the recording speed can be further increased.

That is, after the treatment liquid application step, the white ink is preferably applied to the region to which the treatment liquid has been applied in a state where the rate of drying of the treatment liquid is 30% or less, and after the treatment liquid application step, the white ink is preferably applied within 10 seconds to the region to which the treatment liquid has been applied.

Note that the "rate of drying of the treatment liquid" is defined by the following Formula 5.

Rate of drying of processing liquid (%) = {1 - (weight of treatment liquid after drying [g]/weight of treatment liquid before drying [g])} $\times$ 100      (Equation 5)

After the treatment liquid application step, by applying the white ink in a state where the rate of drying of the treatment liquid is 30% or less, the white ink and the treatment liquid are appropriately mixed, and the white pigment in the white ink is easily aggregated, and thus it is possible to improve image quality.

In addition, by applying the white ink within 10 seconds after the treatment liquid application step, it is possible to suppress permeation of the treatment liquid into a recording medium having high absorbency and repelling of the treatment liquid on a recording medium having low absorbency or no absorbency.

Note that the rate of drying of the treatment liquid can be adjusted to 30% or less by appropriately adjusting the time until the white ink is applied after the treatment liquid application step and the temperature of the recording medium.

In view of image quality, the amount of application (also referred to as the "application amount") of the white ink per unit area in the white ink application process is preferably in a range of 2 to 25 times, more preferably in a range of 2.5 to 3.5 times the application amount of the treatment liquid. The application amount of the white ink can be adjusted by the liquid amount of a droplet of the ejected ink. Note that the amount added here is expressed in mass [g].

Since the white ink of the present invention is an inkjet recording ink, the white ink application step is performed by an inkjet coating method.

The inkjet coating method is not particularly limited, and can be performed using a printer provided with an inkjet head loaded with the white ink. Specifically, the white ink is discharged as liquid droplets from the nozzles of the inkjet head based on a digital signal, and the droplets are landed on the treatment liquid layer of the recording medium to form a white ink layer.

The inkjet head may be either an on-demand type inkjet head or a continuous type inkjet head. Examples of the on-demand type inkjet head include electro-mechanical conversion types including a single cavity type, a double cavity type, a bender type, a piston type, a share mode type, and a shared wall type, and electro-thermal conversion types including a thermal inkjet type and a bubble jet ("Bubble Jet" is a trademark of CANON INC.) type.

Among these, an inkjet head using a piezoelectric element as an electromechanical conversion element used in an electromechanical conversion method (also referred to as a piezoelectric inkjet head) is preferable.

The inkjet printer may have an inkjet head of either a scanning type or a single-pass type, and for the single-pass type printer, the inkjet head is preferably an inkjet head of a line head type.

Note that the "inkjet head of a line head type" refers to an inkjet head having a length equal to or greater than the width of the printing range. As the inkjet head of the line head type, a head having a length equal to or larger than the width of the printing range may be used, or a plurality of heads may be combined to have a length equal to or larger than the width of the printing range.

Furthermore, a plurality of heads may be arranged in parallel such that their nozzles are arranged in a staggered manner, and the resolution of these heads as a whole may be increased.

The conveyance speed of the recording medium is preferably within a range of 1 to 120 m/min. As the conveyance speed is increased, the recording speed (image forming speed) can be increased. Note that the white ink of the present invention can provide a high-definition image even at a very high conveyance speed of 50 to 120 m/min, which can be applied to a single-pass inkjet printer.

The thickness of the white ink layer formed in the white ink application step is preferably in a range of 0.3 to 3.0 $\mu$m, more preferably in a range of 0.3 to 2.0 $\mu$m. When the thickness of the white ink layer is 0.3 $\mu$m or more, the scratch resistance of the image and the adhesion of the image to the recording medium can be improved. Furthermore, when the thickness of the white ink layer is 3.0 $\mu$m or less, the deformation stress acting on the white ink layer can be reduced, and the adhesion of the image to the recording medium is less likely to be impaired.

In the white ink application step, the surface temperature of the recording medium is preferably within a range of 10 to 65 °C. Furthermore, in view of clogging-related reliability, it is more preferably 50 °C or lower, and even more preferably 40 °C or lower. On the other hand, from the viewpoint of further increasing the recording speed, the temperature is more preferably 20 °C or higher, still more preferably 40 °C or higher, and particularly preferably 50 °C or higher.

3) Step of Applying Color Ink onto Recording Medium (Color Ink Application Step)

In the color ink applying step, although not particularly limited, it is preferable that the white ink is applied onto top of a region to which the treatment liquid is directly applied on the recording medium, and the color ink is further applied onto top.

In the color ink application step, the color ink is preferably applied using the color ink by the same method as in the white ink application step.

In a case where the color ink is further applied onto top of a region to which the treatment liquid is directly applied and the white ink is applied thereon on the recording medium, the treatment liquid and the white ink may not be completely dried. By applying the color ink in a state in which the white ink is not completely dried, the treatment liquid and the color ink can react with each other, that is, the color ink can be aggregated even with the white ink in between. In addition, even when the treatment liquid and the white ink are not completely dried, it is possible to apply the color ink while suppressing bleeding, and it is possible to further increase the recording speed.

A step of drying at least part of the treatment liquid and the white ink applied to the recording medium may be provided before the color ink application step. The drying step is preferably a step of partially drying without completely drying. In addition, during or after the color ink application step, a step of drying the color ink applied to the recording medium may be included.

4) Step of Heating and Drying White Ink or Color Ink (Ink Heating and Drying Step)

The image forming method according to the present invention may include an ink heating and drying step in addition to the treatment liquid application step, the white ink application step, and the color ink application step.

The ink heating and drying step may be performed only after the white ink application step, only after the color ink application step, or both after the white ink application step and after the color ink application step.

In the ink heating and drying step, the treatment liquid may be dried in addition to the white ink and the color ink, and hereinafter, a case where both the ink and the treatment liquid are dried in the ink heating and drying step will be described.

The ink and the treatment liquid can be dried by heating the ink applied to the recording medium (the "ink" herein may be any of the white ink only, the color ink only, and both the white ink and the color ink), that is, a region of the recording medium where the ink has been applied in the ink heating and drying step.

In the ink heating and drying step, the heating temperature of the region to which the ink is applied is preferably in the range of 60 to 200 °C. It is preferable that the heating time of the ink is appropriately adjusted according to the type of the recording medium and the ink application amount.

By heating the region to which the ink is applied, it is possible to remove water, an organic solvent, or the like which are a solvent component of the ink and the treatment liquid. Furthermore, the scratch resistance and the adhesion to the recording medium of the image to be obtained can be improved.

The heating and drying may be performed, for example, using a non-contact heating type drying device such as a drying furnace or a hot-air blower, or using a contact heating type drying device such as a hot plate or a heat roller.

As the drying temperature, in a case of using a non-contact heating type drying device such as a drying furnace or a hot-air blower, it is preferable to measure an atmosphere temperature such as a furnace temperature or a hot-air temperature. In addition, in a case where a contact heating type drying device such as a hot plate or a heat roller is used, it is preferable to measure the temperature of a contact heating part or the surface temperature of the surface to be dried, and among them, it is more preferable to measure the surface temperature of the surface to be dried.

<<Image Forming Apparatus>>

The image forming apparatus of the present invention is an image forming apparatus using an inkjet recording ink containing at least a pigment, a dispersant, and water, and includes means for carrying out the image forming method described above.

Hereinafter, an example of the image forming apparatus of the present invention will be described.

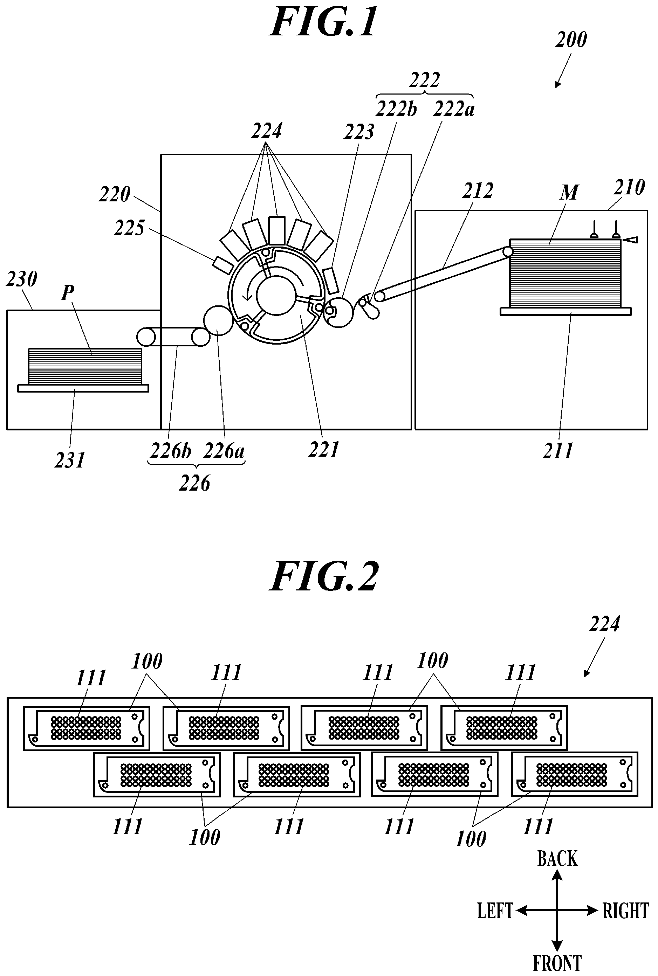

As illustrated in Fig. 1, the image forming apparatus 200 includes a sheet feed section 210, an image recording section 220, a sheet ejection section 230, an ink circulation device (not illustrated) as an ink supplying means, a controller (not illustrated), and the like. The image forming apparatus 200 conveys a recording medium M stored in the sheet feed section 210 to the image recording section 220, forms an image on the recording medium M at the image recording section 220, and conveys the recording medium M on which the image is formed to the sheet ejection section 230.

The sheet feed section 210 includes a sheet feed tray 211 that stores the recording medium M and a medium feed section 212 that conveys and feeds the recording medium M from the sheet feed tray 211 to the image recording section 220. The medium feed section 212 includes a ring-shaped belt whose inner side is supported by two rollers, and rotates the rollers while the recording medium M is placed on the belt to convey the recording medium M from the sheet feed tray 211 to the image recording section 220.

The image recording section 220 includes a conveyance drum 221, a handover unit 222, a heating section 223, a carriage 224, a fixing section 225, and a delivery section 226.

The conveyance drum 221 has a cylindrical surface, and the outer circumferential surface thereof is a conveyance surface on which the recording medium M is placed. The conveyance drum 221 rotates in the direction of the arrow in Fig. 1 while holding the recording medium M on its conveyance surface, thereby conveying the recording medium M along the conveyance surface. The conveyance drum 221 also includes a claw section and a suction section (not illustrated), and holds the recording medium M on the conveyance surface by pressing the edge portion of the recording medium M with the claw section and sucking the recording medium M to the conveyance surface with the suction section.

The handover unit 222 is provided at a position between the medium feed section 212 of the sheet feed section 210 and the conveyance drum 221, and holds one end of the recording medium M conveyed from the medium feed section 212 with a swing arm section 222a to pick the recording medium M up, and then hands over the recording medium M to the conveyance drum 221 via a handover drum 222b.

The heating section 223 is provided between the arrangement position of the handover drum 222b and the arrangement position of the carriage 224, and heats the recording media M so that the recording medium M conveyed by the conveyance drum 221 have a temperature within a predetermined temperature range. The heating section 223 includes, for example, an infrared heater or the like, and energizes the infrared heater on the basis of a control signal supplied from a controller (not illustrated) to cause the heater to generate heat.

In the present invention, the term "carriage" refers to a member that supports an inkjet head. The carriage is not particularly limited as long as it can support the inkjet head, and the carriage may or may not have an ink tank mounted thereon.

The inkjet head 100 disposed in the carriage 224 forms an image by discharging ink onto the recording medium M at an appropriate timing according to the rotation of the conveyance drum 221 on which the recording medium M is held, based on image data.

The carriage 224 faces the conveyance drum 221 on the inkjet ejection face at a predetermined distance. In the inkjet recording apparatus 200 according to the present embodiment, for example, five carriages 224 corresponding to five inks of white (W), yellow (Y), magenta (M), cyan (C), and black (K), respectively, are arranged side by side at predetermined intervals in the order of the colors of W, Y, M, C, and K from the upstream side in the conveyance direction of the recording medium M. Furthermore, when a treatment liquid is used, a carriage 224 that ejects the treatment liquid may be arranged. For example, when it is used as a pretreatment liquid for the white ink of the present invention, it is placed on the most upstream side in the conveyance direction of the recording medium M.

As described above, an apparatus having a means for performing the treatment liquid applying step may be further used when the treatment liquid is applied by a coating method other than the inkjet coating method.

Note that the order of application of the respective inks and the treatment liquid can be adjusted by appropriately adjusting the arrangement order of the carriages 224 corresponding to the white ink (white (W)), the treatment liquid, and the color inks (yellow (Y), magenta (M), cyan (C), and black (K)).

In the carriage 224, for example, as illustrated in Fig. 2, sets of a pair of inkjet heads 100 adjacent in the front-rear direction are disposed in a staggered pattern at different positions in the front-rear direction.

Further, in the present invention, the image forming apparatus 200 performs image formation of a one-pass drawing method using a line head, and the carriage 224 is used with its position being fixed with respect to the rotation axis of the conveyance drum 221 at the time of image recording. However, the inkjet recording apparatus of the present invention may be a scanning type, and in the scanning type, the carriage reciprocates in the sub-scanning direction.

The fixing section 225 dries and fixes the ink and the treatment liquid discharged onto the recording medium M.

The delivery section 226 includes a belt loop 226a having a ring-shaped belt whose inner side is supported by two rollers and a handover drum 226b in a cylindrical shape that hands over the recording medium M from the conveyance drum 221 to the belt loop 226b, and the recording medium M handed over from the conveyance drum onto the belt loop 226b by the handover drum 226a is conveyed by the belt loop 226b and sent to the sheet ejection section 230.

The sheet ejection section 230 includes a sheet ejection tray 231 that has a plate shape and on which the recording medium P sent from the image recording section 220 by the delivery section 226 is placed.

[Examples]

Hereinafter, the present invention will be specifically described with reference to Examples, but the present invention is not limited thereto. In the examples, "part(s)" or "%" means "part(s) by mass" or "mass%" unless otherwise specified.

In the following examples, operations were performed at room temperature (25°C) unless otherwise specified.

Preparation of White Ink

< Preparation of White Pigment Dispersion 1 >

The following components were mixed, and the resulting mixture was premixed.

| | |
|---|---|
| White pigment (CR-50-2, titanium oxide, manufactured by ISHIHARA SANGYO KAISHA, LTD.) | 30.00 parts by mass |
| 20 mass% solution of the pigment dispersant (DISPERBYK-2019, manufactured by Byk-Chemie GmbH, solid concentration: 52 mass%) | 7.50 parts by mass |
| Propylene glycol | 28.00 parts by mass |
| Anti-mold agent (Proxel GXL (S), manufactured by Lonza K.K.) | 0.10 parts by mass |
| Ion-exchanged water (balance, in an amount such that the total amount is 100 parts by mass) | |

Thereafter, 0.3 mm zirconia beads were dispersed using a bead mill filled with 60% by volume to prepare a white pigment dispersion 1 having a pigment content of 30% by mass.

The average dispersion particle size of the particles contained in the white pigment dispersion 1 was 238 nm. The average dispersed particle diameter of the pigment particles was measured with "Zetasizer Nano S90" manufactured by Malvern Panalytical Ltd.

< Preparation of White Pigment Dispersion 2 >

The following components were mixed, and the resulting mixture was premixed.

| | |
|---|---|
| White pigment (CR-50-2, titanium oxide, manufactured by ISHIHARA SANGYO KAISHA, LTD.) | 30.00 parts by mass |
| 20 mass% solution of the pigment dispersant (DISPERBYK-2019, manufactured by Byk-Chemie GmbH, solid concentration: 52 mass%) | 7.50 parts by mass |
| Propylene glycol | 28.00 parts by mass |
| Anti-mold agent (Proxel GXL (S), manufactured by Lonza K.K.) | 0.10 parts by mass |
| Ion-exchanged water (balance, in an amount such that the total amount is 100 parts by mass) | |

Thereafter, 0.3 mm zirconia beads were dispersed using a bead mill filled with 60% by volume to prepare a white pigment dispersion liquid 2 having a pigment content of 30% by mass.

Next, a solution in which 20 mass% of the following anionic resin having a carboxy group neutralized with dimethylaminoethanol was dissolved was added and mixed into the white pigment dispersion liquid 2 described above, to prepare a white pigment dispersion 2.

| | |
|---|---|
| Anionic resin (JONCRYL® 690 by Basf SE) 20% by mass solution | 7.50 parts by mass |

The average dispersed particle size of pigment particles contained in the white pigment dispersion 2 was 235 nm. The average dispersed particle diameter of the pigment particles was measured with "Zetasizer Nano S90" manufactured by Malvern Panalytical Ltd.

< Preparation of White Pigment Dispersions 3 to 24 and 30 to 32 >

White pigment dispersions 3 to 24 and 30 to 32 were prepared in the same manner as the white pigment dispersion 2 except that dispersants, anionic resins, and white pigments indicated in Tables I to III were used. The average dispersed particle diameters of the pigment particles contained in the white pigment dispersions 3 to 24 and 30 to 32 were as shown in Tables I to III, respectively.

< Preparation of White Dispersions 25 to 28 >

White pigment dispersions 25 to 28 were prepared in the same manner as the white pigment dispersion 2 except that the dispersion time of the bead mill dispersion was changed and the average dispersed particle diameters of the white pigment particles were changed to those listed in Table III.

< Preparation of White Pigment Dispersion 29 >

A white pigment dispersion 29 was prepared in the same manner as white pigment dispersion 2 except that the anionic resin was added and mixed before the bead mill dispersion, and then the mixture was dispersed using a bead mill. The average dispersion particle diameter of the pigment particles contained in the white pigment dispersion 29 was as listed in Table III.

The dispersant, the anionic resin, and the white pigment used are shown below.

(Dispersants)

a: DISPERBYK® 2019 manufactured by Byk-Chemie GmbH
(amine value: 22, acid value: 0)
b: DISPERBYK® 2018, manufactured by Byk-Chemie GmbH
(amine value: 26, acid value: 0)
c: DISPERBYK® 2055, manufactured by Byk-Chemie GmbH
(amine value: 40, acid value: 0)
d: TEGO® Dispers 650, manufactured by Evonik Operations GmbH
(amine value: 50, acid value: 0)
e: EFKA® 6230, by BASF Japan Ltd.
(amine value: 100, acid value: 0)
f: DISPERBYK® 2010, manufactured by Byk-Chemie GmbH
(amine value: 20, acid value: 20)
g: DISPERBYK® 180 manufactured by Byk-Chemie GmbH
(amine value: 94, acid value: 94)
h: DISPERBYK® 190 (comparative example) manufactured by Byk-Chemie GmbH
(amine value: 0, acid value: 10)
i: TEGO® Dispers 655 (comparative example) manufactured by Evonik Operations GmbH
(amine value: 0, acid value: 100)
j: DISPERBYK® 2061, manufactured by Byk-Chemie GmbH
(amine value: 3, acid value: 0)
k: FLOWLEN DOPA-100, manufactured by Kyoeisha Chemical Industry Co., Ltd.
(amine value: 135, acid value: 15)

(Anionic Resin)

t: JONCRYL® 690, by BASF Japan Ltd.
(acid value: 240, weight average molecular weight: 16500)

u: JONCRYL® 819, by BASF Japan Ltd.
(acid value: 75, weight average molecular weight: 15000)
v: 3401MA, manufactured by Taisei Fine Chemical Co., Ltd.
(acid value: 27, weight average molecular weight: 27000)
w: JONCRYL® 611, by BASF Japan Ltd.
(acid value: 53, weight average molecular weight: 8100)
x: ARUFON® UF-5041, manufactured by Toagosei Co., Ltd.
(acid value: 260, weight average molecular weight: 7500)
y: JONCRYL® 680, by BASF Japan Ltd.
(acid value: 215, weight average molecular weight: 4500)
z: JONCRYL® 693, by BASF Japan Ltd.
(acid value: 205, weight average molecular weight: 6000)

(White Pigment)

α: CR-50-2 manufactured by ISHIHARA SANGYO KAISHA, LTD.
(titanium oxide, rutile type, main treatment agent: alumina and organic substance)
β: PF691 manufactured by ISHIHARA SANGYO KAISHA, LTD.
(titanium oxide, rutile type, main processing agents: alumina, silica, and organic substance)
γ: CR-58 manufactured by ISHIHARA SANGYO KAISHA, LTD.
(titanium oxide, rutile type, main treatment agent: alumina)
δ: A-220, manufactured by ISHIHARA SANGYO KAISHA, LTD.
(titanium oxide, anatase type)

The compositions of each white pigment dispersion is illustrated in the following Tables I to III.

Note that in the tables, "-" indicates that the concerning item is not added.

The unit of the amine value and the acid value is [mg KOH/g], the unit of the average dispersed particle size is [nm], the unit of the content is [part(s) by mass], "DMAE" represents dimethylaminoethanol, and "NaOH" represents sodium hydroxide.

In the content of the 20 mass% solution of the dispersant and the 20 mass% solution of the anionic resin, a numerical value in parentheses (()) represents a substantial content [parts by mass] of the dispersant or the anionic resin when the total amount of each white pigment dispersion is set to 100 parts by mass, and "dispersant: anionic resin" represents a mass ratio of the content of the dispersant to the content of the anionic resin.

[Table 1]

TABLE I

| White Pigment Dispersion No. | | 1 | 2 | 3 | 4 | 5 | 6 | 7 | 8 | 9 | 10 | 11 |
|---|---|---|---|---|---|---|---|---|---|---|---|---|
| White Pigment | Type | $\alpha$ | $\alpha$ | $\alpha$ | $\alpha$ | $\alpha$ | $\alpha$ | $\alpha$ | $\alpha$ | $\alpha$ | $\alpha$ | $\alpha$ |
| Dispersant | Type | a | a | a | b | c | d | e | f | g | a | a |
| | Amine Value | 22 | 22 | 22 | 26 | 40 | 50 | 100 | 20 | 94 | 22 | 22 |
| | Acid Value | 0 | 0 | 0 | 0 | 0 | 0 | 0 | 20 | 94 | 0 | 0 |
| Anionic Resin | Type | - | t | u | t | t | t | t | t | t | t | t |
| | Acid Value | - | 240 | 75 | 240 | 240 | 240 | 240 | 240 | 240 | 240 | 240 |
| | Weight Average Molecular Weight | - | 16500 | 15000 | 16500 | 16500 | 16500 | 16500 | 16500 | 16500 | 16500 | 16500 |
| | Basic Compound | - | DMAE | DMAE | DMAE | DMAE | DMAE | DMAE | DMAE | DMAE | DMAE | DMAE |
| Content | White Pigment | 30.00 | 30.00 | 30.00 | 30.00 | 30.00 | 30.00 | 30.00 | 30.00 | 30.00 | 30.00 | 30.00 |
| | Dispersing Agent 20 mass% Solution | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 3.75 (0.75) | 22.50 (4.50) |
| | Anionic Resin 20 mass% Solution | - | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 22.50 (4.50) | 3.75 (0.75) |
| | Propylene Glycol | 28.00 | 28.00 | 28.00 | 28.00 | 28.00 | 28.00 | 28.00 | 28.00 | 28.00 | 28.00 | 28.00 |
| | Anti-mold Agent | 0.10 | 0.10 | 0.10 | 0.10 | 0.10 | 0.10 | 0.10 | 0.10 | 0.10 | 0.10 | 0.10 |
| | Ion Exchange Water | 34.40 | 26.90 | 26.90 | 26.90 | 26.90 | 26.90 | 26.90 | 26.90 | 26.90 | 15.65 | 15.65 |
| Dispersant: Anionic Resin | | - | 1:1 | 1:1 | 1:1 | 1:1 | 1:1 | 1:1 | 1:1 | 1:1 | 1:6 | 6:1 |
| Average Dispersed Particle Diameter | | 238 | 235 | 242 | 253 | 245 | 248 | 256 | 247 | 257 | 267 | 230 |

[Table 2]

[Table 2]

TABLE II

| White Pigment Dispersion No. | | 12 | 13 | 14 | 15 | 16 | 17 | 18 | 19 | 20 | 21 | 22 |
|---|---|---|---|---|---|---|---|---|---|---|---|---|
| White Pigment | Type | $\alpha$ | $\alpha$ | $\alpha$ | $\alpha$ | $\alpha$ | $\alpha$ | $\alpha$ | $\alpha$ | $\alpha$ | $\beta$ | $\gamma$ |
| Dispersant | Type | a | a | j | k | a | a | a | a | a | a | a |
| | Amine Value | 22 | 22 | 3 | 135 | 22 | 22 | 22 | 22 | 22 | 22 | 22 |
| | Acid Value | 0 | 0 | 0 | 15 | 0 | 0 | 0 | 0 | 0 | 0 | 0 |
| Anionic Resin | Type | t | t | t | t | v | w | x | y | Z | t | t |
| | Acid Value | 240 | 240 | 240 | 240 | 27 | 53 | 260 | 215 | 205 | 240 | 240 |
| | Weight Average Molecular Weight | 16500 | 16500 | 16500 | 16500 | 27000 | 8100 | 7500 | 4500 | 6000 | 16500 | 16500 |
| | Basic Compound | DMAE | DMAE | DMAE | DMAE | DMAE | DMAE | DMAE | DMAE | DMAE | DMAE | DMAE |
| Content | White Pigment | 30.00 | 30.00 | 30.00 | 30.00 | 30.00 | 30.00 | 30.00 | 30.00 | 30.00 | 30.00 | 30.00 |
| | Dispersing Agent 20 mass% Solution | 3.75 (0.75) | 26.25 (5.25) | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 7.50 (1.50) |
| | Anionic Resin 20 mass% Solution | 26.25 (5.25) | 3.75 (0.75) | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 7.50 (1.50) |
| | Propylene Glycol | 28.00 | 28.00 | 28.00 | 28.00 | 28.00 | 28.00 | 28.00 | 28.00 | 28.00 | 28.00 | 28.00 |
| | Anti-mold Agent | 0.10 | 0.10 | 0.10 | 0.10 | 0.10 | 0.10 | 0.10 | 0.10 | 0.10 | 0.10 | 0.10 |
| | Ion Exchange Water | 11.90 | 11.90 | 26.90 | 26.90 | 26.90 | 26.90 | 26.90 | 26.90 | 26.90 | 26.90 | 26.90 |
| Dispersant: Anionic Resin | | 1:7 | 7:1 | 1:1 | 1:1 | 1:1 | 1:1 | 1:1 | 1:1 | 1:1 | 1:1 | 1:1 |
| Average Dispersed Particle Diameter | | 257 | 236 | 267 | 265 | 251 | 254 | 257 | 255 | 253 | 215 | 282 |

[Table 3]

[Table 3]

TABLE III

| White Pigment Dispersion No. | | 23 | 24 | 25 | 26 | 27 | 28 | 29 | 30 | 31 | 32 |
|---|---|---|---|---|---|---|---|---|---|---|---|
| White Pigment | Type | $\delta$ | $\alpha$ | $\alpha$ | $\alpha$ | $\alpha$ | $\alpha$ | $\alpha$ | $\alpha$ | $\alpha$ | $\alpha$ |
| Dispersant | Type | a | a | a | a | a | a | a | h | h | i |
| | Amine Value | 22 | 22 | 22 | 22 | 22 | 22 | 22 | 0 | 0 | 0 |
| | Acid Value | 0 | 0 | 0 | 0 | 0 | 0 | 0 | 10 | 10 | 100 |
| Anionic Resin | Type | t | t | t | t | t | t | t | t | t | t |
| | Acid Value | 240 | 240 | 240 | 240 | 240 | 240 | 240 | 240 | 240 | 240 |
| | Weight Average Molecular Weight | 16500 | 16500 | 16500 | 16500 | 16500 | 16500 | 16500 | 16500 | 16500 | 16500 |
| | Basic Compound | DMAE | NaOH | DMAE | DMAE | DMAE | DMAE | DMAE | DMAE | DMAE | DMAE |
| Content | White Pigment | 30.00 | 30.00 | 30.00 | 30.00 | 30.00 | 30.00 | 30.00 | 30.00 | 30.00 | 30.00 |
| | Dispersing Agent 20 mass% Solution | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 3.75 (0.75) | 7.50 (1.50) |
| | Anionic Resin 20 mass% Solution | 7.50 (1.50) | 7.50 (1.50) | 7.50 (1.50) | 7.50 (1.50) | 7.50 (1.50) | 7.50 (1.50) | 7.50 (1.50) | 7.50 (1.50) | 26.25 (5.25) | 7.50 (1.50) |
| | Propylene Glycol | 28.00 | 28.00 | 28.00 | 28.00 | 28.00 | 28.00 | 28.00 | 28.00 | 28.00 | 28.00 |
| | Anti-mold Agent | 0.10 | 0.10 | 0.10 | 0.10 | 0.10 | 0.10 | 0.10 | 0.10 | 0.10 | 0.10 |
| | ion Exchange Water | 26.90 | 26.90 | 26.90 | 26.90 | 26.90 | 26.90 | 26.90 | 26.90 | 11.90 | 26.90 |
| Dispersant: Anionic Resin | | 1:1 | 1:1 | 1:1 | 1:1 | 1:1 | 1:1 | 1:1 | 1:1 | 1:7 | 1:1 |
| Average Dispersed Particle Diameter | | 163 | 237 | 134 | 152 | 347 | 380 | 243 | 263 | 274 | 258 |

< Preparation of White Ink 1 >

The following components were mixed, and the obtained mixed solution was filtered through a 1-$\mu$m filter to prepare White ink 1. Note that there was no substantial composition change before and after the filtration.

| | |
|---|---|
| White pigment dispersion 1 (10 parts by mass as the white pigment solid content) | 33.33 parts by mass |
| Resin fine particle dispersion (Vylonal MD-2000, manufactured by Toyobo Co., Ltd., aqueous dispersion of polyester resin having a number average molecular weight of 18000, solid content concentration: 40 mass%). | 12.50 parts by mass |
| Propylene glycol | 21.00 parts by mass |
| Diethylene glycol monobutyl ether | 1.60 parts by mass |
| Glycerin | 5.00 parts by mass |
| Surfactant (KF-351A, manufactured by Shin-Etsu Chemical Co., Ltd.) | 0.30 parts by mass |
| Surfactant (E1010, manufactured by Nissin Chemical co., ltd) | 1.00 parts by mass |
| Anti-mold agent (Proxel GXL (S), manufactured by Lonza K.K.) | 0.10 parts by mass |
| Ion-exchanged water (balance, in an amount such that the total amount is 100 parts by mass) | |

< Preparation of White Inks 2 to 32 >

White inks 2 to 32 were prepared in the same manner as White ink 1 except that the white pigment dispersions illustrated in Tables IV to VI were used.

< Preparation of Pretreatment Liquid >

The following components were mixed, and the obtained mixed solution was filtered through a 5-$\mu$m membrane filter to obtain the pretreatment solution.

| | |
|---|---|
| Propylene glycol | 30.00 parts by mass |
| Flocculant (calcium acetate, manufactured by KANTO CHEMICAL CO.,INC.) | 3.00 parts by mass |
| Silicone-based surfactant (BYK® 3450, manufactured by Byk-Chemie GmbH) | 1.00 parts by mass |
| Ion exchange water | 66.00 parts by mass |

< Evaluation >

(1) Redispersibility (Redispersibility of White Pigment)

10 g of each white ink was placed in a centrifuge tube made of PP in 15 mL, and a centrifugal force corresponding to 90 days was applied with a centrifuge to sediment the white pigment, followed by being left to stand for 15 to 20 hours. After being left, the centrifuge tube was gently inclined, and the height of accumulation of the precipitated white pigment was measured. Next, the centrifuge tube was fixed to a shaking machine and shaken, and the white pigment was redispersed. After being shaken for 60 minutes, the centrifuge tube was again inclined, and the height of accumulation of the precipitated white pigment was measured.

The height of accumulation of the precipitated white pigment was evaluated according to the following criteria. A rating of △ (triangle) or higher passes.

◎ (double circle): A height of accumulation of the white pigment is less than or equal to 9 mm.
o (circle): A height of accumulation of the white pigment is greater than 9 mm and equal to or less than 10 mm.
△ (triangle): A height of accumulation of the white pigment is greater than 10 mm and equal to or less than 11 mm.
✕ (cross mark): A height of accumulation of the white pigment is greater than the 11 mm.

(2) Storage Stability (Storage Stability of Ink)

The average dispersed particle diameter of the white pigment particles in the ink and the viscosity of the ink were measured before and after each white ink was heated at 60 °C for 2 weeks. The average dispersed particle size of the white pigment particles in the ink was measured using "Zetasizer Nano S90" manufactured by Malvern Panalytical Ltd., the viscosity of the ink was measured using "TVE-33 LT" manufactured by Toki Sangyo Co., Ltd, and the measurement conditions were 25 °C, a standard cone rotor (0.8 ° × R24), a sample liquid amount of $600\mu$ L, and 1 minute.

Then, change rates of the average dispersed particle diameter of the white pigment particles in the ink and the viscosity of the ink before heating, and the average dispersed particle diameter of the white pigment particles in the ink and the viscosity of the ink after heating were calculated by the following formulae.

Change rate (%) of average dispersion particle diameter of white pigment particles in ink = {(average dispersed particle diameter of white pigment particles in ink after heating - average dispersed particle diameter of white pigment particles in ink before heating)/average dispersed particle diameter of white pigment particles in ink before heating} × 100.　　　　(Formula 6)

Change rate (%) of viscosity of ink = {(viscosity of ink after heating - viscosity of ink before heating) / viscosity of ink before heating} × 100　　　　(Formula 7)

The change rates of the average dispersed particle diameter of the white pigment particles in the ink and of the viscosity of the ink were evaluated according to the following criteria. A rating of △ (triangle) or higher passes.

o (circle): The values of both of the two change rates are 5% or less.
△ (triangle): The values of both of the two change rates are 10% or less. (However, the values of both of the two change rates of 5% or less, that is, the values corresponding to o (circle) are excluded.)
× (cross mark): At least one of the two change rates is more than 10%.

(3) Image Quality (Image Unevenness)

The pretreatment liquid and each of the white inks were combined to form an ink set, and printing was performed by the following method. As recording media, PET films (FE 2001, 50 $\mu$m-thick, manufactured by Futamura Chemical Co., Ltd.) were prepared.

A scan type printer equipped with two independent drive type inkjet heads (360npi, discharge amount 6pL or 14pL, 1024 nozzles) manufactured by Konica Minolta, Inc. was prepared, and the pre-treatment liquid was filled in the head which performs recording first, and the white ink was filled in the head which performs recording later. Thereafter, the image of a resolution of 720 × 720dpi was divided into two by two in the scanning direction X and the conveyance direction Y to form four images (180 × 180 dpi), and printing was performed in one direction in which the pre-treatment liquid was always recorded first in a 4-pass mode in which one printing region was printed four times.

The conveyance speed of the carriage was set to 300 mm/sec, and a drying step was not provided between recording with the pretreatment liquid and recording with the white ink. Printing was tested under an environment of a 25 °C/50% RH.

The recording of the pretreatment liquid was performed with a liquid amount of 6 pL and a maximum printing rate of 33%, and was applied in accordance with the image region of the ink. The recording of the white ink was performed with a liquid amount of 14 pL and a maximum printing rate of 100%. In the above-described setting, the amount of the pretreatment liquid applied to the solid printing portion was 1.7 g/m$^2$, the amount of the white ink applied to the solid printing portion was 11.9 g/m$^2$, and the ratio of the amount of the white ink applied to the amount of the pretreatment liquid applied in the solid printing portion (amount of white ink applied/amount of pretreatment liquid applied) was 7.0.

In the above printing, after the white ink was applied, the PET film was put into a dryer set at 90 °C and heated and dried for 5 minutes to obtain an image recorded matter.

An image recorded matter on which a 5 cm × 5 cm solid printing image was recorded by the method described above was prepared, and the density unevenness of the solid printing portion was visually evaluated according to the following criteria. A rating of △ (triangle) or higher passes.

o (circle): No density unevenness is recognized in the image when observed from a distance of 15 cm.
△ (triangle): Density unevenness is recognized in part of the image when observed from a distance of 15 cm, but the density unevenness is not recognized from a distance of 30 cm.
× (cross mark) :30cm Density unevenness is recognized on the image when observed from a distance of 30 cm.

(4) Whiteness

An image recorded matter on which a 5 cm × 5 cm solid printing image was recorded by the method described above was prepared, and the whiteness of the solid printing portion was measured using a fluorescence spectrodensitometer "FD-7" manufactured by Konica Minolta, Inc, and evaluated according to the following criteria. A rating of △ (triangle) or higher passes.

○ (circle): Whiteness degree is 76 or more.
△ (triangle): Whiteness degree is 74 or more and less than 76.
✕ (cross mark): Whiteness degree is less than 74.

(5) Ejection Stability

Each white ink was filled in an independently driven inkjet head (360npi, ejection amount: 6pL, 1024 nozzles) manufactured by Konica Minolta, Inc, and a continuous ejection test was performed for 30 minutes with a stroboscope-synchronized droplet observation device. The ejection stability was evaluated according to the following criteria. A rating of △ (triangle) or higher passes.

○ (circle): The white ink is normally ejected in all the nozzles (256 nozzles) among the 256 nozzles evaluated, and no ejection abnormality is observed.
△ (triangle): An ejection abnormality is observed in 1 nozzle or more and 4 nozzles or less out of the evaluated 256 nozzles.
✕ (cross mark): An ejection abnormality is observed in 5 or more of the 256 nozzles evaluated.

(6) Maintainability

0.05 g of each white ink was dropped on a member used in a nozzle portion of an independent driving type inkjet head manufactured by Konica Minolta, Inc, and dried at 50 °C for 10 minutes. The dried white ink was rubbed with a wiping member soaked with the following maintenance liquid, to perform maintenance of the nozzles.
The maintenance liquid was prepared by mixing the following components.

| | |
|---|---|
| Dipropylene glycol monopropyl ether | 5.00 parts by mass |
| 2-amino-2-methyl-1 -propanol | 2.00 parts by mass |
| Surfactant (E1010, manufactured by Nissin Chemical co., ltd) | 0.05 parts by mass |
| Anti-mold agent (Proxel GXL (S), manufactured by Lonza K.K.) | 0.10 parts by mass |
| Ion -exchanged water (balance; amount such that total amount is 100 parts by mass) | |

As the wiping member, a ruby cell stick head (polyurethane) manufactured by AS ONE CORPORATION was used.
The number of times of maintenance work (number of times of rubbing) of the nozzle and the peeling state of the dried substance (dried white ink) were evaluated according to the following criteria. A rating of △ (triangle) or higher passes.

◎ (double circle): The dried substance can be removed when the number of times of maintenance work is 3 or less.

○ (circle): The dried substance can be removed when the number of times of maintenance work is 4 or more and 7 or less.

△ (triangle): The dried substance can be removed when the number of times of maintenance work is 8 times or more and 10 times or less.

✕ (cross mark): The dried substance cannot be removed even when the number of times of maintenance work is 11 or more.

The evaluation results are shown in the following Tables IV to VI.
For Ink 1, the evaluation of the ink set (image quality and whiteness) was not performed. Note that in the tables, "-" indicates that the evaluation was not performed.

[Table 4]

TABLE IV

| Ink No. | | 1 | 2 | 3 | 4 | 5 | 6 | 7 | 8 | 9 | 10 | 11 |
|---|---|---|---|---|---|---|---|---|---|---|---|---|
| White Pigment Dispersion No. | | 1 | 2 | 3 | 4 | 5 | 6 | 7 | 8 | 9 | 10 | 11 |
| Evaluation | Redispersibility | ◎ | ◎ | ◎ | ◎ | ◎ | ◎ | ○ | ◎ | ○ | ○ | ◎ |
| | Storage Stability | ○ | ○ | ○ | ○ | ○ | ○ | ○ | ○ | ○ | △ | ○ |
| | image Quality | - | ○ | ○ | ○ | ○ | ○ | ○ | ○ | ○ | △ | △ |
| | Whiteness | - | ○ | ○ | ○ | ○ | ○ | ○ | ○ | ○ | ○ | ○ |
| | Ejection Stability | ○ | ○ | ○ | ○ | ○ | ○ | ○ | ○ | ○ | △ | △ |
| | Maintainability | △ | ◎ | ◎ | ◎ | ◎ | ◎ | ○ | ○ | ○ | ◎ | ◎ |
| Remarks | | *1 | *1 | *1 | *1 | *1 | *1 | *1 | *1 | *1 | *1 | *1 |
| *1: Example | | | | | | | | | | | | |

[Table 5]

TABLE V

| Ink No. | | 12 | 13 | 14 | 15 | 16 | 17 | 18 | 19 | 20 | 21 | 22 |
|---|---|---|---|---|---|---|---|---|---|---|---|---|
| White Pigment Dispersion No. | | 12 | 13 | 14 | 15 | 16 | 17 | 18 | 19 | 20 | 21 | 22 |
| Evaluation | Redispersibility | ○ | ○ | △ | ◎ | ◎ | ◎ | ◎ | ◎ | ◎ | ◎ | ◎ |
| | Storage Stability | △ | ○ | △ | △ | △ | ○ | ○ | △ | ○ | ○ | ○ |
| | Image Quality | △ | △ | ○ | ○ | △ | ○ | △ | ○ | ○ | ○ | ○ |
| | Whiteness | △ | △ | ○ | ○ | ○ | ○ | ○ | ○ | ○ | ○ | ○ |
| | Ejection Stability | △ | △ | ○ | ○ | ○ | ○ | ○ | ○ | ○ | ○ | ○ |
| | Maintainability | △ | △ | ○ | ○ | ○ | ○ | ○ | △ | ○ | ◎ | ◎ |
| Remarks | | *1 | *1 | *1 | *1 | *1 | *1 | *1 | *1 | *1 | *1 | *1 |
| *1: Example | | | | | | | | | | | | |

[Table 6]

TABLE VI

| Ink No. | | 23 | 24 | 25 | 26 | 27 | 28 | 29 | 30 | 31 | 32 |
|---|---|---|---|---|---|---|---|---|---|---|---|
| White Pigment Dispersion No. | | 23 | 24 | 25 | 26 | 27 | 28 | 29 | 30 | 31 | 32 |
| Evaluation | Redispersibility | ◎ | ◎ | ◎ | ◎ | ◎ | ◎ | ◎ | × | × | × |
| | Storage Stability | △ | ○ | △ | ○ | △ | △ | ○ | △ | × | × |
| | Image Quality | ○ | ○ | △ | ○ | ○ | ○ | ○ | ○ | △ | △ |
| | Whiteness | △ | ○ | △ | ○ | ○ | ○ | ○ | △ | △ | ○ |
| | Ejection Stability | ○ | ○ | ○ | ○ | ○ | △ | ○ | ○ | △ | ○ |
| | Maintainability | ◎ | ◎ | ◎ | ◎ | ○ | ○ | ◎ | ○ | × | ○ |

(continued)

| Ink No. | 23 | 24 | 25 | 26 | 27 | 28 | 29 | 30 | 31 | 32 |
|---|---|---|---|---|---|---|---|---|---|---|
| White Pigment Dispersion No. | 23 | 24 | 25 | 26 | 27 | 28 | 29 | 30 | 31 | 32 |
| Remarks | *1 | *1 | *1 | *1 | *1 | *1 | *1 | *2 | *2 | *2 |
| *1: Example  *2: Comparative Example | | | | | | | | | | |

The comparison of Inks 1, 2, and 4 to 9 with Inks 30 to 32 (comparative examples) shows that when the amine value of the dispersant according to the present invention is greater than 0, that is, the dispersant according to the present invention has basic nitrogen, the redispersibility of the white pigment is improved.

The comparison of Inks 2 and 4 to 9 with Inks 14 and 15 shows that when the amine value of the dispersant is within the range of 5 to 100 mg KOH/g, the storage stabilities of the inks are improved.

The comparison of Inks 2, 10, and 11 with Ink 13 shows that when the content of the dispersant is in a range of 2.5 to 15 mass% with respect to the total mass of the white pigment, the whiteness and the maintainability are improved.

The comparison of Ink 2 with Ink 24 shows that the ink having similar properties can be prepared by neutralizing the anionic resin with dimethylaminoethanol or sodium hydroxide, which is a basic compound.

The comparison of Inks 2, 3, 17, 19, and 20 with Inks 16 and 18 shows that when the acid values of the anionic resins are in the range of 50 to 250 mg KOH/g, the image quality is improved.

The comparison of the inks 2, 3, 16 to 18, and 20 with Ink 19 shows that when the weight-average molecular weight of the anionic resin is within the range of 5000 to 30000, the storage stability and the maintainability of the ink are improved.

The comparison of Inks 2, 10, and 11 with Inks 12 and 13 shows that when the mass ratio of the content of the dispersant to the content of the anionic resin is within the range of 1:6 to 6:1, the redispersibility of the white pigment, the whiteness, and the maintainability are improved.

The comparison of Inks 2, 21, and 22 with Ink 23 shows that the ink having similar properties can be prepared when the white pigment is a white metal oxide and titanium oxide particles. Furthermore, the storage stability and whiteness of the ink are improved when the titanium oxide particles are of a rutile type and treated with alumina.

The comparison of Inks 2, 26, and 27 with Inks 25 and 28 shows that when the average dispersed particle diameter of the white pigment is within the range of 150 to 350 nm, the storage stabilities of the inks, the image quality, the whiteness, and the ejection stabilities are improved.

The comparison of Ink 2 and Ink 29 shows that when the ink having similar characteristics can be prepared by either method of adding and mixing an anionic resin after bead mill dispersion or adding and mixing an anionic resin before bead mill dispersion and then dispersing using a bead mill in the preparation of the white pigment dispersion.

Industrial Applicability

The present invention can improve the redispersibility of the white pigment in the ink for inkjet recording, and provide the ink for inkjet recording which can be stored for a long period of time. Furthermore, combined use of the ink and the color ink according to the present invention can provide a recorded material having improved color developability.

[Reference Signs List]

100　INKJET HEAD

111　NOZZLE

200　IMAGE FORMING APPARATUS

210　SHEET FEED SECTION

211　SHEET FEED TRAY

212　MEDIA FEED SECTION

220　IMAGE RECORDING SECTION

221    CONVEYANCE DRUM

222    HANDOVER UNIT

223    HEATING SECTION

224    CARRIAGE

225    FIXING SECTION

226    DELIVERY SECTION

230    SHEET EJECTION SECTION

231    SHEET EJECTION TRAY

M      RECORDING MEDIUM

P      RECORDING MEDIUM

**Claims**

1.  An inkjet recording ink containing:

    at least a white pigment; a dispersant; and water,
    wherein the dispersant has a basic nitrogen.

2.  The inkjet recording ink according to claim 1,
    wherein an amine value of the dispersant is within a range of 5 to 100 mg KOH/g.

3.  The inkjet recording ink according to claim 1 or 2,
    wherein a content of the dispersant is in a range of 2.5 to 15 mass% relative to a total mass of the white pigment.

4.  The inkjet recording ink according to any one of claims 1 to 3, further containing:
    an anionic resin.

5.  The inkjet recording ink according to claim 4,
    wherein the anionic resin is neutralized with a basic compound.

6.  The inkjet recording ink according to claim 4 or 5,
    wherein an acid value of the anionic resin is within a range of 50 to 250 mg KOH/g.

7.  The inkjet recording ink according to any one of claims 4 to 6,
    wherein a weight average molecular weight of the anionic resin is within the range of 5000 to 30000.

8.  The inkjet recording ink according to any one of claims 4 to 7,
    wherein a mass ratio of the content of the dispersant to a content of the anionic resin is within a range of 1:6 to 6:1.

9.  The inkjet recording ink according to any one of claims 1 to 8,
    wherein the white pigment is a white metal oxide.

10. The inkjet recording ink according to claim 9,
    wherein the white metal oxide is rutile-type titanium oxide particles.

11. The inkjet recording ink according to any one of claims 1 to 10,
    wherein the white pigment is at least alumina-treated.

12. The inkjet recording ink according to any one of claims 1 to 11,

wherein an average dispersed particle diameter of the white pigment is within a range of 150 to 350 nm.

13. An inkjet recording ink producing method for producing the inkjet recording ink according to any one of claims 1 to 12, wherein the method comprises producing a pigment dispersion (I) containing the white pigment, the dispersant, and the water.

14. An inkjet recording ink producing method for producing the inkjet recording ink according to any one of claims 4 to 12, the method comprising:

preparing a pigment dispersion (I) containing the white pigment, the dispersant, and the water; and
mixing the anionic resin with the pigment dispersion (I) to prepare a pigment dispersion (II).

15. An inkjet recording ink producing method for producing the inkjet recording ink according to any one of claims 4 to 12, the method comprising:
preparing a pigment dispersion (III) containing the white pigment, the dispersant, the water, and the anionic resin.

16. An inkjet recording ink set for producing the inkjet recording ink according to any one of claims 4 to 12, wherein the treatment liquid contains a cationic compound.

17. An image forming method using the inkjet recording ink set according to claim 16, the method comprising:

applying the treatment liquid onto a recording medium; and
applying the inkjet recording ink onto the recording medium.

18. An image forming method using the inkjet recording ink set according to claim 16 and a color ink, the method comprising:

applying the treatment liquid onto a recording medium;
applying the inkjet recording ink onto the recording medium; and
applying the color ink onto the recording medium.

19. An image forming method using the inkjet recording ink set according to claim 16 and a color ink, the method comprising:

applying the treatment liquid onto a recording medium;
applying the inkjet recording ink to an area onto which the treatment liquid has been applied; and
applying the color ink to the area onto which the inkjet recording ink has been applied.

20. An image forming apparatus using an inkjet recording ink containing at least a white pigment, a dispersant, and water, wherein the image forming apparatus comprises a unit that performs the image forming method according to any one of claims 17 to 19.

# *FIG.1*

# *FIG.2*

## INTERNATIONAL SEARCH REPORT

International application No.

**PCT/JP2022/012161**

### A. CLASSIFICATION OF SUBJECT MATTER

*C09D 11/322*(2014.01)i; *C09D 11/326*(2014.01)i; *C09D 11/54*(2014.01)i
FI: C09D11/326; C09D11/322; C09D11/54

According to International Patent Classification (IPC) or to both national classification and IPC

### B. FIELDS SEARCHED

Minimum documentation searched (classification system followed by classification symbols)

C09D11/00-13/00; B41J2/01; B41J2/165-2/20; B41J2/21-2/215; B41M5/00; B41M5/50; B41M5/52

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2022/014454 A1 (SANYO COLOR WORKS, LTD.) 20 January 2022 (2022-01-20) claims 1-2, 5-6, 10, 14-15, paragraphs [0009], [0010], [0030], [0031], [0036]-[0039], examples 12-25 | 1-3, 9-13 |
| A | | 4-8, 14-20 |
| X | WO 2020/054289 A1 (FUJIFILM CORP.) 19 March 2020 (2020-03-19) claims 1, 6, 8-9, 11, 15-16, paragraphs [0026], [0030], [0040]-[0043], [0060]-[0068], examples 19-21 | 1-6, 8-15 |
| A | | 7, 16-20 |
| X | JP 2020-125381 A (NIPPON KAYAKU CO., LTD.) 20 August 2020 (2020-08-20) claims 1, 3, 7-10, paragraphs [0011]-[0014], [0042], examples 1-3 | 1-15 |
| A | | 16-20 |
| X | JP 2021-187095 A (SEIKO EPSON CORP.) 13 December 2021 (2021-12-13) claims 1, 3, 5-7, 11-13, paragraphs [0004], [0005], [0014]-[0017], [0027], [0038], [0065]-[0070], [0127]-[0131], [0192]-[0229], examples 1-20 | 1-5, 8-10, 12-20 |
| A | | 6-7, 11 |

✓ Further documents are listed in the continuation of Box C.    ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 May 2022 | 07 June 2022 |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/012161** |

**C.    DOCUMENTS CONSIDERED TO BE RELEVANT**

| Category* | Citation of document, with indication, where appropriate, of the relevant passages | Relevant to claim No. |
|---|---|---|
| A | JP 2021-31603 A (SEIKO EPSON CORP.) 01 March 2021 (2021-03-01)<br>claims 1-15, paragraphs [0078]-[0091], [0111]-[0124], [0128]-[0141], examples 1-26 | 1-20 |

Form PCT/ISA/210 (second sheet) (January 2015)

**INTERNATIONAL SEARCH REPORT**
Information on patent family members

International application No.

**PCT/JP2022/012161**

| Patent document cited in search report | | | Publication date (day/month/year) | Patent family member(s) | Publication date (day/month/year) |
|---|---|---|---|---|---|
| WO | 2022/014454 | A1 | 20 January 2022 | (Family: none) | |
| WO | 2020/054289 | A1 | 19 March 2020 | US 2021/0108100 A1 claims 1, 6, 8-9, 11, 15-16, paragraphs [0063]-[0069], [0077], [0101], [0146]-[0172], examples 19-21 EP 3851499 A1 CN 112399997 A | |
| JP | 2020-125381 | A | 20 August 2020 | (Family: none) | |
| JP | 2021-187095 | A | 13 December 2021 | (Family: none) | |
| JP | 2021-31603 | A | 01 March 2021 | US 2021/0062027 A1 claims 1-15, paragraphs [0078]-[0091], [0111]-[0124], [0128]-[0141], examples 1-26 | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107406698
- CN 107429090
- JP S5774193 A
- JP S5787988 A
- JP S62261476 A
- JP S5774192 A
- JP S5787989 A
- JP S6072785 A
- JP S61146591 A

- JP H0195091 A
- JP H0313376 A
- JP S5942993 A
- JP S5952689 A
- JP S62280069 A
- JP S61242871 A
- JP H04219266 A
- JP 62280069 A